(19) Europäisches Patentamt
European Patent Office
Office européen des brevets

(11) EP 4 574 798 A1

(12) # EUROPEAN PATENT APPLICATION

(43) Date of publication:
**25.06.2025 Bulletin 2025/26**

(21) Application number: **23217702.2**

(22) Date of filing: **18.12.2023**

(51) International Patent Classification (IPC):
***C04B 28/06*** $^{(2006.01)}$ ***C04B 40/00*** $^{(2006.01)}$

(52) Cooperative Patent Classification (CPC):
(C-Sets available)
**C04B 28/06; C04B 40/0039;** C04B 2111/00715
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Hilti Aktiengesellschaft**
  **9494 Schaan (LI)**
- **Technische Universität München**
  **80333 München (DE)**

(72) Inventors:
- **SCHÖNLEIN, Markus**
  **81249 München (DE)**
- **GÄDT, Torben**
  **85748 Garching (DE)**
- **DÖNMEZ, Alper-Sedat**
  **85748 Garching (DE)**

(74) Representative: **Maiwald GmbH**
**Elisenhof**
**Elisenstraße 3**
**80335 München (DE)**

(54) **AN EXPEDITING COMPOSITION FOR ACCELERATING THE HARDENING OF CALCIUM ALUMINATE CEMENTS**

(57) Expediting composition suitable for accelerating the curation of a mortar comprising aluminous cement obtainable by a process, wherein the process comprises mixing the following components A) aluminous cement, B) at least one dispersant agent for dispersing inorganic particles in water, C) water, wherein the weight ratio of component A) to component C) is in the range of from 1.5:1 to 1:70, and wherein the weight ratio of component A) to component B) is more than 20:1.

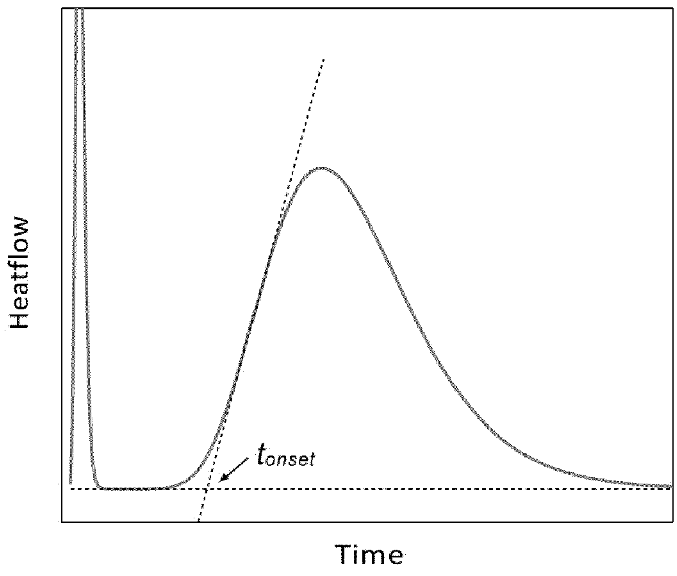


Figure 1

(52) Cooperative Patent Classification (CPC): (Cont.)

C-Sets
**C04B 28/06, C04B 7/32, C04B 24/2605,**
**C04B 22/16, C04B 2103/30, C04B 40/065;**
**C04B 40/0039, C04B 7/32, C04B 24/165,**
**C04B 20/008, C04B 22/064, C04B 14/303;**
**C04B 40/0039, C04B 7/32, C04B 24/246;**
**C04B 40/0039, C04B 7/32, C04B 24/2647,**
**C04B 20/008**

## Description

### Technical field of the Invention

The present invention relates to the field of expediting compositions for calcium aluminate cements, the use thereof for accelerating the hardening of calcium aluminate cements, mortars comprising said expediting compositions, and the use of such expediting compositions in said mortars.

### Background of the Invention

Calcium aluminate cements (CACs) present a readily available alternative to ordinary Portland cement (OPC). In particular, CACs are hydraulic binders with higher temperature resistance, a higher resilience to sulfate attack and a faster strength development (cf. Scrivener et al., Capmas in Lea's Chemistry of Cement and Concrete, 1998, p. 713-782). Due to mentioned properties the calcium aluminate cements can be used as a dental material, repair mortar, and as a type of geothermal well cement for production of refractory fast setting, non-shrinking, acidproof concretes.

Another advantage of CACs is that higher strength values can be achieved within a shorter time period. Hence, CACs are typically used in fast curing/rapid hardening applications, such as floor levelling or repair (cf. Scrivener et al., Capmas in Lea's Chemistry of Cement and Concrete, 1998, p. 713-782). Nevertheless, it is always a general desire to further accelerate the curing/hardening process.

Hence, CACs are enhanced by additives, which can accelerate the hardening reaction, thereby minimizing the time window for the hydraulic binder to harden. While various accelerator additives are known, the typically such accelerators contain a Lithium source (cf. WO 2017/067953 A1, Scrivener et al., Capmas in Lea's Chemistry of Cement and Concrete, 1998, p. 713-782 and H. Pöllmann, Reviews in Mineralogy and Geochemistry, Vol. 74, 2012, p. 1-82). However, this approach has the disadvantage that Lithium as raw material is not readily available and faces a high demand from the growing battery industry. Hence, this material is expected to have decreasing availability and increasing prices in the future (cf. Yang et al., Energy Storage Materials, 2021, 36, p. 186-212). As a further drawback, Lithium is currently also under suspicion of being a "category 1A reproductive toxin", apart from several other health risks. Thus, there is the general demand of finding an alternative accelerator for CAC systems, which is less expensive and exposes lower health risks.

As an alternative, inorganic minerals with high specific surface area, such as $Al_2O_3$, $Al(OH)_3$, or $CaCO_3$, have been suggested as cheap materials with lower health risks (cf. Engbert et al., JACS, 2021, 104, p. 1067-1075; H. Darweesh, Ceramics International, 2004, 30, p. 145-150; WO 2023/280572 A1. However, these additives have the drawback of less pronounced accelerating effects.

An alternative inorganic material that accelerates the CAC hydration is mayenite ($C_{12}A_7$) (cf. Koehler et al., Cement and Concrete Research, 2022, 162, p. 106972, and Sawkow et al., Journal of Thermal Analysis and Calorimetry, 2003, 74, p. 451-458). However, the process for preparing mayenite includes high temperatures. Therefore, the desire for finding more energy and, thus, cost efficient processes for preparing materials for acceleration is still present.

The main hydrate phases occurring in CAC are $CAH_{10}$, $C_2AH_8$, $AH_3$, and $C_3AH_6$ (katoite). $CAH_{10}$ and $C_2AH_8$ are metastable and convert into the more stable hydrate phases $AH_3$ and $C_3AH_6$.

Goergens et al. described the addition of prehydrated CAC, which comprises mainly $C_2AH_x$ and $AH_3$ to CAC at 10 °C (cf. Goergens et al., Cement and Concrete Research, 2020, 136, p. 106160). The prehydrated CAC acts as a source of $C_2AH_x$, which alters the reaction by a "seeding" effect. Still, no accelerating effect has been observed.

Baltakys et al. reported on the accelerating effect of substituting parts of the CAC with the stable calcium aluminate hydrate phase $C_3AH_6$. (cf. Baltakys et al., Ceramics International, 2019, 45, p. 2881-2886). Nevertheless, the preparation of katoite is also complex.

Furthermore, the suspensions as shown in these references have either a high viscosity or a low load of solid material, therefore being not feasible to be used in a fluid-fluid two-component system.

### Summary of the Invention

The materials used in the prior art as described above are typically produced in a co-precipitation approach. However, the resulting composition still could be improved in view of the accelerating effect.

Hence, it is an object of the present invention to find compositions, which have improved acceleration effect in view of hardening CAC and the use thereof in a two-component mortar system.

It now has been surprisingly found that above-mentioned object can be achieved by an expediting composition suitable for accelerating the curation of a mortar comprising aluminous cement obtainable by a process, wherein the process comprises mixing the following components A) aluminous cement, B) at least one dispersant agent for dispersing inorganic particles in water, and C) water, wherein the weight ratio of component A) to component C) is in the range of from 1.5:1 to 1:70, and wherein the weight ratio of component A) to component B) is more than 20:1.

Moreover, it has been surprisingly found that above-mentioned object is achieved by the use of a composition according to the present invention for accelerating the curing of a mortar comprising aluminous cement, preferably a cement selected from a list consisting of a mixture of $Al(OH)_3$ with CaO and/or $Ca(OH)_2$, calcium aluminate cement, or a mixture thereof.

Above-mentioned object is furthermore surprisingly achieved by a two-component mortar system comprising a curable aqueous-phase aluminous cement component and an activator component in aqueous-phase suitable for initiating the curing process, wherein the activator component comprises, preferably consists of, the expediting composition according to the present invention.

Finally, it has been found out that the above-mentioned object can be achieved by the use of a two-component mortar system according to the present invention for chemical fastening of anchoring means in mineral surfaces.

The particular advantage of the present invention lies in improved accelerating effect of the expediting composition of the hardening of CAC cement, even though a simplification for the preparation process for an expediting composition suitable for accelerating the curation of a mortar comprising aluminous cement, in particular a simplification up to a one-pot reaction, is used.

## Brief Description of the Drawings

**Figure 1** shows a scheme of the determination of the start of the main heat evolution ($t_{onset}$) by the intersection of the minimum plateau line and the maximum slope line.

**Figure 2** shows a heat flow diagram for RE1 (1) and systems using CE5 (CE10).

**Figure 3** shows a heat flow diagram for RE1 (1) and systems using IE1 (IE5).

**Figure 4** shows a heat flow diagram for RE1 (1) and systems using CE3 (CE8).

**Figure 5** shows a heat flow diagram for RE1 (1) and systems using CE1 (CE6).

**Figure 6** shows a heat flow diagram for RE1 (1) and systems using CE2 (CE7).

**Figure 7** shows a XRD pattern of IE1.

**Figure 8** shows a XRD pattern of CE3.

**Figure 9** shows a XRD pattern of CE4.

**Figure 10** shows a XRD pattern of CE5.

**Figure 11** shows a XRD pattern of IE2.

**Figure 12** shows a XRD pattern of IE3.

**Figure 13** shows a XRD pattern of IE4.

**Figure 14** shows a process scheme for determining the Feret diameter.

## Definitions

The term *"dispersant"* as used herein denotes a substance, preferably a surfactant, that is suitable to improve the separation of particles in a suspension of solid or liquid particles in a liquid, such as a colloid or emulsion, and to prevent settling or clumping of the particles over the time. Dispersants are used as plasticizers or superplasticizers in concrete formulations to lower the use of water while retaining the needed slump (flow) property. A lower water content makes the concrete stronger and more impervious to water penetration. Similarly, dispersants are used as plasticizers in gypsum slurry during wallboard manufacture, to reduce the amount of water used. The lower water usage allows lower energy use to dry the wallboard.

The term *"mortar"* as used herein denotes a workable paste, which binds after a given time. Preferably, mortars

comprise cement and becomes hard when cured, resulting in a rigid aggregate structure. Typically, mortar comprises sand, a binder, such as cement, and water. The most common binder since the early 20th century is Portland cement.

The term *"copolymer"* as used herein demotes a polymer polymerized from at least two different monomers. However, preferably, the copolymer is polymerized from three or more different monomers.

As used in the context of present invention, the singular forms of *"a"* and *"an"* also include the respective plurals unless the context clearly dictates otherwise. Thus, the term *"a"* or *"an"* is intended to mean *"one or more"* or *"at least one",* unless indicated otherwise.

The term *"aluminous cement"* as used herein denotes a calcium aluminate cement that consists predominantly of hydraulic active calcium aluminates. Alternative names are *"high-alumina cement"* or *"Ciment fondu"* in French. The main active constituent of calcium aluminate cements is monocalcium aluminate ($CaAl_2O_4$, $CaO \cdot Al_2O_3$, or CA in the cement chemist notation).

The term *"shelf life"* as used herein denotes the time during which a component stays in the form of a more or less fluid aqueous suspension of solid products, capable of coming back to the aqueous suspension by mechanical means, without setting or losing its reactivity.

The term *"initiator"* as used herein denotes a compound or composition that modifies the chemical environment to start a particular chemical reaction. In the present invention the initiator modifies the pH-value of the mortar suspension thereby deblocking the hydraulic binder in the final mixture.

The term *"retarder"* as used herein denotes a compound or composition that modifies the chemical environment to delay a particular chemical reaction. In the present invention the retarder modifies the hydration ability of the calcium aluminate cement of the mortar suspension thereby delaying the hydraulic binder action in the final mixture.

**Detailed Description of the Invention**

As set out above, the present invention is concerned in a first aspect with an expediting composition obtainable by a process comprising the step of mixing the following components A) aluminous cement, B) at least one dispersant agent for dispersing inorganic particles in water, and C) water, wherein the weight ratio of component A) to component C) is in the range of from 1.5:1 to 1:70, and wherein the weight ratio of component A) to component B) is more than 20:1, in a second aspect with a use of the expediting composition according to the present invention to accelerate the hardening reaction of CAC, in a third aspect with a two-component mortar system comprising CAC and the expediting composition according to the present invention, and in a fourth aspect with a use of a two-component mortar system according to the invention for chemical fastening of anchoring means in mineral surfaces. These aspects of the invention are described in detail in the following.

*Expediting composition*

In a first aspect the present invention is concerned with an expediting composition suitable for accelerating the curing of a mortar comprising aluminous cement obtainable by a process, wherein the process comprises mixing the following components:

A) aluminous cement,

B) at least one dispersant agent for dispersing inorganic particles in water,

C) water,

wherein the weight ratio of component A) to component C) is in the range of from 1.5:1 to 1:70, and
wherein the weight ratio of component A) to component B) is more than 20:1.

Preferably, the aluminous cement according to the first aspect of the present invention comprises at least monocalcium aluminate and dicalciumaluminate, more preferably consists of monocalcium aluminate and dicalcium aluminate, even more preferably consists of monocalcium aluminate in an amount higher than 50 wt.-% with respect to the weight of the aluminous cement and dicalciumaluminate in an amount higher than 15 wt.-% with respect to the total weight of the aluminous cement, and most preferably of monocalcium aluminate in an amount in the range of from 55 wt.-% to 80 wt.-% with respect to the total weight of the aluminous cement and dicalcium aluminate in an amount in the range of from 20 wt.-% to 45 wt.-% with respect to the total amount of the aluminous cement. It should be noted that without wishing to being bound by theory, it is believed that the aluminous cement in the process of the present invention leads to the formation of active species such as $CAH_{10}$, $C_2AH_8$, $AH_3$, and $C_3AH_6$ (katoite), wherein $CAH_{10}$ and $C_2AH_8$ are metastable and most likely convert into the more stable hydrate phases $AH_3$ and $C_3AH_6$, which are able to efficiently accelerate the hardening

reaction of CAC. The calcium aluminate cement which can be used in the present invention is characterized by rapid set and rapid hardening, rapid drying, excellent resistance to corrosion and shrinkage. Such a calcium aluminate cement suitable to be used in the present invention is for example Ternal® White (Kerneos, France).

The process for obtaining the expediting composition according to the first aspect of the present invention uses at least on dispersant. The role of the dispersant is to help forming a fine suspension of CAC in water. Without wishing to being bound by theory it is believed that a fine dispersion of the CAC in water helps to provide nano-sized particles of CAC and its hydrates having a high specific surface. It is further believed that the smaller the particles are and the higher the specific surface is, not only the hydration rate at the surface will be higher, but also the acceleration effect will be more significant.

It has been found that preferably for achieving the above-mentioned effects most efficiently, the at least one dispersant of the process for obtaining the expedition composition according to the first aspect of the present invention is a water-soluble polymer having polyether groups according to the structural unit (I),

$$*\text{-U-(C(O))}_k\text{-X-(AlkO)}_n\text{-W} \qquad \text{(I)}$$

wherein

- * denotes the binding site to the polymer,
- U denotes a chemical bond or an alkylene group with 1 to 8 C-atoms,
- X denotes oxygen, sulfur, or a group $NR^1$,
- k is 0 or 1,
- n is an integer whose mean value, relative to the polymer, is in the range from 3 to 300,
- Alk denotes an $C_2$-$C_4$-alkylene, wherein Alk of the group $(Alk\text{-}O)_n$ can be the same or different,
- W denotes a hydrogen radical, a $C_1$-$C_6$ alkyl radical, or an aryl radical, or denotes the group Y-F, wherein
- Y denotes a linear or branched alkylene group containing 2 to 8 carbon atoms which may bear a phenyl ring,
- F denotes a 5- to 10-membered nitrogen heterocycle, which may in addition to the nitrogen atom and in addition to carbon atoms have as ring members 1, 2, or 3 additional heteroatoms selected from the group consisting of oxygen, nitrogen, and sulfur, wherein the nitrogen ring members may have a group $R^2$, and wherein 1 or 2 carbon ring members may be present as a carbonyl group,
- $R^1$ denotes hydrogen, $C_1$-$C_4$-alkyl, or benzyl, and
- $R^2$ denotes hydrogen, $C_1$-$C_4$-alkyl or benzyl.

Preferably, the at least one dispersant of the process for obtaining the expediting composition according to the first aspect of the present invention comprises at least one functional group selected from the list consisting of carboxyester-, carboxy-, phosphono-, sulfino-, sulfo-, sulfamido-, sulfoxy-, sulfoalkyloxy-, sulfinoalkyloxy- and phosphonooxy group.

In a preferred embodiment of the process for obtaining the expediting composition according to the first aspect of the present invention, the at least one dispersant comprises a polycondensation product comprising

(II) a structural unit comprising an aromatic or heteroaromatic unit and a polyether group, and

(III) a phosphated structural unit comprising an aromatic or heteroaromatic unit. Preferably, the structural units (II) and (III) are represented by the following general formulae

$$\text{A-U-(C(O))}_k\text{-X-(AlkO)}_n\text{-W} \qquad \text{(II)}$$

wherein

A denotes a substituted or unsubstituted aromatic or heteroaromatic unit having from 5 to 10 carbon atoms in

the aromatic system, where the residues thereof have the meanings given for structural unit (I);

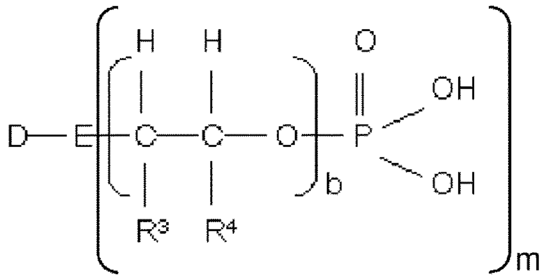

(III)

wherein

D denotes a substituted or unsubstituted aromatic or heteroaromatic compound having 5 to 10 carbon atoms in the aromatic system,

E is selected from the group consisting of N, NH, or O, wherein m = 2 if E = N and m = 1 if E = NH or O,

$R^3$, $R^4$ independently denote a branched or unbranched $C_1$- to $C_{10}$-alkyl unit, $C_5$- to $C_8$-cycloalkyl unit, aryl unit, heteroaryl unit, or H, and

b being an integer from 0 to 300.

The polycondensation product according to the first aspect of the present invention preferably comprises a further structural unit (IV) represented by the following formula

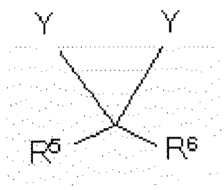

(IV)

wherein

Y independently denotes the same or different unit represented by (II), (III) or other components of the polycondensation product.

$R^5$ and $R^6$ are preferably identical or different and represented by H, $CH^3$, COOH, substituted or unsubstituted, aromatic or heteroaromatic compound having 5 to carbons. $R^5$ and $R^6$ here in structural unit (IV) are independently of one another preferably represented by H, COOH and/or methyl.

In one particular preferred embodiment, $R^5$ and $R^6$ are represented by H.

The molar ratio of the structural units (II), (III), and (IV) in the phosphated polycondensation product used in the of the process for obtaining the expediting composition according to the first aspect of the invention may be varied within wide ranges. It has proven useful for the molar ratio of the structural units [(II) + (III)]:(IV) to be 1:0.8 to 3, preferably 1:0.9 to 2, and more preferably 1:0.95 to 1.2.

The molar ratio of the structural units (II): (III) is normally 1:10 to 10:1, preferably 1:7 to 5:1, and more preferably 1:5 to 3:1.

The groups A and D in the structural units (II) and (III) in the polycondensation product are usually represented by phenyl, 2-hydroxyphenyl, 3-hydroxyphenyl, 4hydroxyphenyl, 2-methoxyphenyl, 3-methoxyphenyl, 4-methoxyphenyl, naphthyl, 2hydroxynaphthyl, 4-hydroxynaphthyl, 2-methoxynaphthyl, 4-methoxynaphthyl, preferably phenyl, and A and D may be selected independently of one another and may also each consist of a mixture of the stated compounds. The groups X and E are represented independently of one another preferably by 0.

Preferably, n in structural unit (I) is represented by an integer from 5 to 280, more particularly 10 to 160, and very preferably 12 to 120, and b in structural unit (III) is represented by an integer from 0 to 10, preferably 1 to 7, and more preferably 1 to 5.

The representative radicals whose length is defined by n and b may consist here of uniform structural groups, though it may also be useful for them to comprise a mixture of different structural groups. Furthermore, the radicals of the structural units (II) and (III) may independently of one another each have the same chain length, with n and b in each case being represented by one number. In general, however, it will be useful for these each to be mixtures having different chain lengths, and so the radicals of the 5 structural units in the polycondensation product have different numerical values for n and, independently for b.

In one particular embodiment, the present invention further envisages a sodium, potassium, ammonium and/or calcium salt, and preferably a sodium and/or potassium salt, of the phosphated polycondensation product.

The phosphated polycondensation product used in the process for obtaining the expediting composition according to of the invention frequently has a weight average molecular weight of 5000 g/mol to 150 000 g/mol, preferably 10 000 to 100 000 g/mol, and more preferably 20 000 to 75 000 g/mol.

With regard to the phosphated polycondensation products for preferred use in accordance with the present invention, and to their preparation, reference is additionally made to patent applications WO 2006/042709 A1 and WO 2010/040612 A1, the content of which is hereby incorporated into the specification.

In a further preferred embodiment, the dispersant comprises at least one copolymer which is obtainable by polymerization of a mixture of monomers comprising (V) at least one ethylenically unsaturated monomer which comprises at least one radical from the series of carboxylic acid, carboxylic salt, carboxylic ester, carboxylic amide, carboxylic anhydride, and carboxylic imide and (VI) at least one ethylenically unsaturated monomer comprising a polyether group, the polyether group being represented preferably by the structural unit (I).

The copolymers used in the process for obtaining the expediting composition according to the first aspect of present invention contain at least two monomer units. It may, however, also be advantageous to use copolymers having three or more monomer units.

In another preferred embodiment of the process for obtaining the expediting composition according to the first aspect of the present invention, the at least one dispersant comprises at least one copolymer obtainable by polymerization of a mixture of monomers comprising

(V) at least one ethylenically unsaturated monomer which contains at least one radical from the series consisting of carboxylic acid, carboxylic acid salt, carboxylic acid ester, carboxylic acid amide, carboxylic acid anhydride, and carboxylic acid imide comprises, and

(VI) at least one ethylenically unsaturated monomer comprising a polyether group.

In a preferred embodiment of the process for obtaining the expediting composition according to the first aspect of the present invention, the ethylenically unsaturated monomer (V) is represented by at least one of the following general formulae selected from the group consisting of (Va), (Vb) and (Vc)

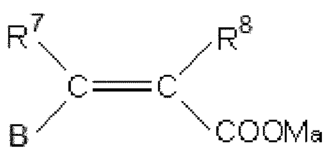 (Va)

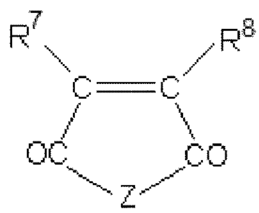 (Vb)

wherein

$R^7$, $R^8$ independently denote hydrogen or an aliphatic hydrocarbon unit having 1 to 20 carbon atoms,

B denotes H, $-COOM_a$, $-CO-O(C_qH_{2q}O)_r-R^9$, $-CO-NH-(C_qH_{2q}O)_r-R^9$,

M denotes hydrogen, a monovalent, divalent or trivalent metal cation, ammonium ion, or an organic amine radical,

A is 1/3, 1/2, or 1,

$R^9$ denotes hydrogen, an aliphatic hydrocarbon radical containing 1 to 20 C-atoms, a cycloaliphatic hydrocarbon radical having 5 to 8 C atoms, an optionally substituted aryl radical having 6 to 14 C atoms

q independently is equally or differently for each ($C_qH_{2q}O$) unit 2, 3 or 4,

r is 0 to 200,

Z is O or $NR^{16}$, and

$R^{16}$ independently is identical or different and denotes a branched or unbranched $C_1$-to $C_{10}$-alkyl radical, $C_5$- to Cs-cycloalkyl radical, aryl radical, heteroaryl radical or H.

The following formula represents monomer [Vc]:

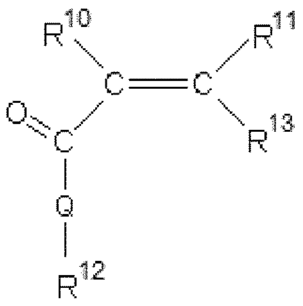

(Vc)

wherein

$R^{10}$, $R^{11}$ denote independently hydrogen or an aliphatic hydrocarbon unit having 1 to 20 carbon atoms, a cycloaliphatic hydrocarbon unit having 5 to 8 carbon atoms, an optionally substituted aryl unit having 6 to 14 carbon atoms,

$R^{12}$ denotes a $(C_nH_{2n})$-$SO_3H$ where n = 0, 1, 2, 3, or 4, $(C_nH_{2n})$-OH where n = 0, 1, 2, 3, or 4; $(C_nH_{2n})$-$PO_3H_2$ with n = 0, 1, 2, 3, or 4, $(C_nH_{2n})$-$OPO_3H_2$ with n= 0, 1, 2, 3, or 4, $(C_6H_4)$-$SO_3H$, $(C_6H_4)$-$PO_3H_2$, $(C_6H_4)$-O-$PO_3H_2$ and $(C_nH_{2n})$-$NR^4_b$ with n = 0, 1, 2, 3, or 4 and b = 2 or 3,

$R^{13}$ denotes H, -$COOM_a$, -CO-O$(C_qH_{2q}O)_r$-$R^9$, -CO-NH-$(C_qH_{2q}O)_r$-$R^9$, wherein $M_a$, $R^9$, q and r have the above-mentioned meanings,

$R^{14}$ denotes hydrogen, an aliphatic hydrocarbon radical having 1 to 10 carbon atoms, a cycloaliphatic hydrocarbon radical having 5 to 8 carbon atoms, an optionally substituted aryl unit having 6 to 14 carbon atoms,

Q denotes NH, $NR^{15}$, or O, wherein $R^{15}$ denotes an aliphatic hydrocarbon radical having 1 to 10 carbon atoms, a cycloaliphatic hydrocarbon radical having 5 to 8 carbon atoms, or an optionally substituted aryl radical having 6 to 14 carbon atoms.

In one particularly preferred embodiment, the ethylenically unsaturated monomer (VI) is represented by the following general formulae (VIa)

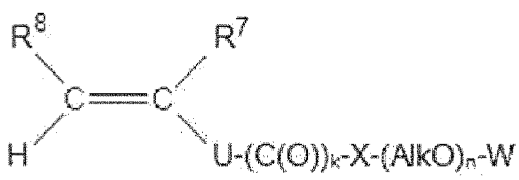

(VIa)

in which all the radicals having the definitions above.

In a further-preferred embodiment, the ethylenically unsaturated monomer (VI) is represented by the following general formulae (VIb)

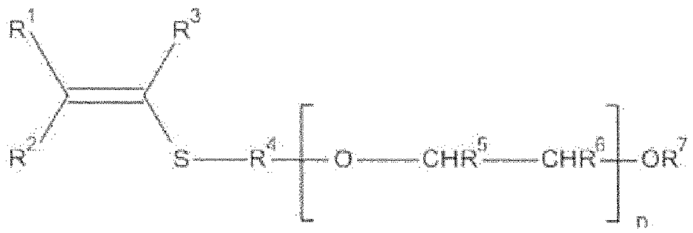

(VIb)

where

$R^1$, $R^2$, $R^3$ independently of one another, identically or differently, are H, $CH_3$,

$R^4$ is linear or branched $C_1$-$C_{30}$ alkylene,

$R^5$, $R^6$ independently of one another, identically or differently, are H, $C_1$-$C_{20}$ alkyl, $C_3$-$C_{15}$ cycloalkyl, aryl, -$CH_2$-O-$C_1$-$C_{20}$ alkyl, $CH_2$-O-$C_2$-$C_{20}$ alkenyl, and $R^5$ and $R^6$ may also together form a $C_3$-$C_6$ alkylene,

$R^7$ independently at each occurrence, identically or differently, is H, $C_1$-$C_4$ alkyl,

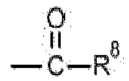

$R^8$ is $C_1$-$C_{22}$ alkyl, $C_2$-$C_{22}$ alkenyl, and

N independently at each occurrence, is identical or different and is an integer from 2 to 200.

In particular, the copolymer preferably has an average molecular weight (Mw) of 5000 g/mol, or more, more preferably 10,000 g/mol or more, and most preferably 15,000 g/mol or more. Moreover, the copolymer preferably has an average molecular weight (Mw) of 150,000 g/mol or less, more preferably of 80,000 g/mol or less, and most preferably of 60,000 g/mol or less. A particularly preferred range of the average molecular weight (Mw) is between 5000 and 150,000 g/mol, more preferably 10,000 to 80,000 g/mol, and most preferably 15,000 to 60,000 g/mol. The average molecular weight (Mw) of the copolymer is determined by gel permeation chromatography.

Preferably, in the process for obtaining the expediting composition according to the first aspect of the present invention the weight ratio of component A) to component B) is 20:1 or higher, preferably 25:1 or higher, and most preferably 35:1 and higher. Moreover, the weight ratio of component A) to component B) is preferably 510:1 or lower, more preferably 300:1 or lower, and most preferably 50:1 or lower. Hence, a particularly preferred range for the weight ratio of component A) to component B) is from 21:1 to 510:1, more preferably from 25:1 to 300:1, and most preferably from 35:1 to 50:1.

Preferably, the weight ratio of component C) to component A) is 5:1 or more, more preferably 7:1 or more, and most preferably 9:1 or more. Moreover, preferably, the weight ratio of component C) to component A) is 15:1 or less, preferably 13:1 or less, and most preferably 11:1 or less. A particularly preferred range for the weight ratio of component C) to component A) is from 5:1 to 15:1, more preferably from 7:1 to 13:1, and most preferably from 9:1 to 11:1.

Preferably, the process for obtaining the expediting composition according to the first aspect of the present invention is carried out at a temperature of 15 °C or more, more preferably 20 °C or more, and most preferably 23 °C or more. Moreover, the process for obtaining the expediting composition according to the first aspect of the present invention is preferably carried out at a temperature of 25 °C or less, more preferably of 23 °C. Hence, the process for obtaining the expediting composition according to the first aspect of the present invention is particularly preferably carried out at a temperature in the range of from 15 to 25 °C, more preferably in the range of from 20 to 23 °C, and most preferably at room temperature.

Also, preferably, the process for obtaining the expediting composition according to the first aspect of the present invention is carried out for a time period of 12 h or more, more preferably of 20 h or more, and most preferably of 45 h or more. Moreover, preferably, the process for obtaining the expediting composition according to the first aspect of the present invention is carried out for a time period of 80 h or less, more preferably of 60 h or less, and most preferably of 55 h or less. The process for obtaining the expediting composition according to the first aspect of the present invention is preferably carried out for a time period in the range of from 12 to 80 H, more preferably from 20 to 60 h, and most preferably from 45 to 55 hIn a preferred embodiment of the first aspect of the present invention, the solids content of the expediting composition has a solids content of equal to or more than4%, more preferably of equal to or more than 5%, even more preferably of equal to or more than 10%, and most preferably of equal to or more than 12%. Preferably, the solids content of the expediting composition is equal to or lower than 45%, more preferably equal to or lower than 25%, even more preferably equal to or lower than 20%, and most preferably equal to or lower than 18%. Preferably, the solids content of the expediting composition is in the range of from 4% to 45%, more preferably in the range of from 5% to 25%, even more preferably in the range of from 10% to 20%, and most preferably in the range of from 12% to 18%.

In another preferred embodiment of the present invention, the expediting composition according to the first aspect of the present invention comprises nano-sized particles. Preferably, the Feret diameter of the nano-sized particles of the expediting composition of the present invention is larger than 55 nm, more preferably equal to or larger than 60 nm, even more preferably equal to or more than 65 nm, and most preferably larger than 70 nm. Usually, the Feret diameter of the nano-sized particles of the expediting compositions is smaller than 150 nm, more preferably smaller than 130 nm, even more preferably smaller than 110 nm, and most preferably smaller than 100 nm, measured according to the method as set out under the section measurement methods herein. Preferably, the particle thickness of the nano-sized particles of the expediting composition of the present invention is in the range of from 3 to 8 nm, preferably from 4 to 6 nm, and most preferably 5 nm, measured according to the method as set out under the section measurement methods herein.

It is a fifth aspect of the present invention to provide an expediting composition suitable for accelerating the curation of a mortar comprising aluminous cement, wherein the expediting composition comprises a mineral component and at least one dispersant agent for dispersing inorganic particles in water, wherein the mineral component comprises at least one calcium aluminate hydrate being present as particles having a Feret diameter in the range of from 55 to 150 nm and wherein the at least one calcium aluminate hydrate phase is present in the mineral phase in an amount in the range of from 10 to 99 wt.-%, preferably 30 to 98 wt.-%, more preferably 60 to 97 wt.-%, and most preferably 95 to 96 wt.-% measured thermal gravimetric analysis as described in the section measurement methods herein.

In another preferred embodiment of the present invention, the expediting composition according to the fifth aspect of the present invention comprises nano-sized particles. Preferably, the Feret diameter of the nano-sized particles of the expediting composition of the fifth aspect of the present invention is larger than 60 nm, and most preferably larger than 70 nm, measured according to the method as set out under the section measurement methods herein. Usually, the Feret diameter of the nano-sized particles of the expediting composition of the fifth aspect of the present invention is smaller than 130 nm, more preferably smaller than 110 nm, and most preferably smaller than 100 nm, measured according to the method as set out under the section measurement methods herein. Preferably, the particle thickness of the nano-sized particles of the expediting composition according to the fifth aspect of the present invention is in the range of from 3 to 8 nm, preferably from 4 to 6 nm, and most preferably 5 nm, measured according to the method as set out under the section measurement methods herein.

Preferably, the particles of the expediting composition according to the fifth aspect of the present invention have a foil-like or a flake-like structure. *Use of the expediting composition*

In a second aspect the present invention is concerned with the use of an expediting composition according to the first aspect of the present invention for accelerating the curing of a mortar comprising aluminous cement.

Preferably, the aluminous cement is selected from the list consisting of a mixture of $Al(OH)_3$ with CaO and/or $Ca(OH)_2$, calcium aluminate cement, and a mixture thereof.

In another preferred embodiment of the present invention, the mortar further comprises at least one component selected from the list consisting of Portland cement, calcium sulfate, slag, preferably granulated blast furnace slag, lime cement, limestone calcined clay cement, fly ash, silica flour, metakaolin, natural pozzolans, calcined oil shale.

*Two-component mortar*

In a third aspect the present invention is concerned with a two-component mortar system comprising a curable aqueous-phase aluminous cement component X and an activator component Y in aqueous-phase suitable for initiating the curing process, wherein component Y comprises an expediting composition according to any of the embodiments of the first aspect of the present invention.

The two-component mortar system according to the third aspect of the present invention is suitable for chemical fastening of anchoring means in mineral surfaces.

Preferably, component X further comprises at least one blocking agent, at least one plasticizer and water, and component Y further comprises an initiator, at least one retarder, at least one mineral filler and water.

Component Y according to the third aspect of the present invention is based on an aqueous-phase aluminous cement. Preferably, the aluminous cement according to the third aspect of the present invention comprises at least monocalcium aluminate and dicalciumaluminate, more preferably consists of monocalcium aluminate and dicalcium aluminate, even more preferably consists of monocalcium aluminate in an amount higher than 50 wt.-% with respect to the weight of the aluminous cement and dicalciumaluminate in an amount higher than 15 wt.-% with respect to the total weight of the aluminous cement, and most preferably of monocalcium aluminate in an amount in the range of from 55 wt.-% to 80 wt.-% with respect to the total weight of the aluminous cement and dicalcium aluminate in an amount in the range of from 20 wt.-% to 45 wt.-% with respect to the total amount of the aluminous cement. The calcium aluminate cement which can be used in the present invention is characterized by rapid set and rapid hardening, rapid drying, excellent resistance to corrosion and shrinkage. Such a calcium aluminate cement suitable to be used in the present invention is for example Ternal® White (Kerneos, France).

In a preferred embodiment of the third aspect of the present invention, in the two-component mortar system

component X further comprises at least one blocking agent selected from the group consisting of phosphoric acid, metaphosphoric acid, phosphorous acid and phosphonic acids, preferably is phosphoric acid or metaphosphoric acid, most preferably is phosphoric acid, in particular an 85% aqueous solution of phosphoric acid. Component X comprises at least 0.1 wt.-%, preferably at least 0.3 wt.-%, more preferably at least 0.4 wt.-%, most preferably at least 0.5 wt.-%, from 0.1 wt.-% to 20 wt.-%, preferably from 0.1 wt.-% to 15 wt.-%, more preferably from 0.1 wt.-% to 10 wt.-%, most preferably from 0.3 wt.-% to 10 wt.-% of said blocking agent, based on the total weight of component X. In a preferred embodiment, component X comprises from 0.3 wt.-% to 10 wt.-% of 85% aqueous solution of phosphoric acid, based on the total weight of component X. Preferably, the amounts of aluminous cement by weight relative to the hydraulic binder total weight are higher than any of the following values: 50%, 60%, 70%, 80%, 90%, 95%, 99% or are 100%.

The two-component mortar system according to any of claims 18 or 19, wherein component Y further comprises a mineral filler, wherein the mineral filler is preferably selected from the group consisting of limestone fillers, sand, corundum, dolomite, baryt, alkaline-resistant glass, crushed stones, gravels, pebbles, and mixtures thereof.

Component X preferably comprises at least one filler, in particular an organic or mineral filler. Preferably, the mineral filler is resistant to acidic pH. The filler is preferably selected from the list consisting of sand, corundum, baryt, alkaline-resistant glass, crushed stones, gravels, pebbles, and mixtures thereof. Component X comprises at least 1 wt.-%, preferably at least 2 wt.-%, more preferably at least 5 wt.-%, most preferably at least 8 wt.-%, from 1 wt.-% to 50 wt.-%, preferably from 2 wt.-% to 40 wt.-%, more preferably from 5 wt.-% to 30 wt.-%, most preferably from 8 wt.-% to 20 wt.-% of said at least one filler, based on the total weight of component X.

The plasticizer comprised in component X according to the third aspect of the present invention is preferably selected from the group consisting of low molecular weight (LMW) polyacrylic acid polymers, superplasticizers from the family of polyphosphonate polyox and polycarbonate polyox, and ethacryl superplasticizers from the polycarboxylate ether group, and mixtures thereof, for example Ethacryl™ G (Coatex, Arkema Group, France), Acumer™ 1051 (Rohm and Haas, U.K.), or Sika® ViscoCrete®-20 HE (Sika, Germany). Suitable plasticizers are commercially available products. Component X comprises at least 0.2 wt.-%, preferably at least 0.3 wt.-%, more preferably at least 0.4 wt.-%, most preferably at least 0.5 wt.-%, from 0.2 wt.-% to 20 wt.-%, preferably from 0.3 wt.-% to 15 wt.-%, more preferably from 0.4 wt.-% to 10 wt.-%, most preferably from 0.5 wt.-% to 5 wt.-% of said plasticizer, based on the total weight of component X.

In an advantageous embodiment, component X further comprises the following characteristics, taken alone or in combination.

Component X may additionally comprise a thickening agent. The thickening agents which can be used in the present invention may be selected from the group consisting of organic products, such as xanthan gum, welan gum or DIUTAN® gum (CPKelko, USA), starched-derived ethers, guar-derived ethers, polyacrylamide, carrageenan, agar agar, and mineral products, such as clay, and their mixtures. Suitable thickening agents are commercially available products. Component X comprises at least 0.01 wt.-%, preferably at least 0.1 wt.-%, more preferably at least 0.2 wt.-%, most preferably at least 0.3 wt.-%, from 0.01 wt.-% to 10 wt.-%, preferably from 0.1 wt.-% to 5 wt.-%, more preferably from 0.2 wt.-% to 1 wt.-%, most preferably from 0.3 wt.-% to 0.7 wt.-% of said thickening agent, based on the total weight of component X.

Component X may further comprise an antibacterial or biocidal agent. The antibacterial or biocidal agents which can be used in the present invention may be selected from the group consisting of compounds of the isothiazolinone family, such as methylisothiazolinone (MIT), octylisothiazolinone (OIT) and benzoisothiazolinone (BIT) and their mixtures. Suitable antibacterial or biocidal agents are commercially available products. Exemplarily mentioned are Ecocide K35R (Progiven, France) and Nuosept OB 03 (Ashland, The Netherlands). Component X comprises at least 0.001 wt.-%, preferably at least 0.005 wt.-%, more preferably at least 0.01 wt.-%, most preferably at least 0.015 wt.-%, from 0.001 wt.-% to 1.5 wt.-%, preferably from 0.005 wt.-% to 0.1 wt.-%, more preferably from 0.01 wt.-% to 0.075 wt.-%, most preferably from 0.015 wt.-% to 0.03 wt.-% of said antibacterial or biocidal agent, based on the total weight of component X. In a preferred embodiment, component X comprises from 0.015 wt.-% to 0.03 wt.-% of Nuosept OB 03, based on the total weight of component X.

The water content comprised In component X is at least 1 wt.-%, preferably at least 5 wt.-%, more preferably at least 10 wt.-%, most preferably at least 20 wt.-%, from 1 wt.-% to 50 wt.-%, preferably from 5 wt.-% to 40 wt.-%, more preferably from 10 wt.-% to 30 wt.-%, most preferably from 15 wt.-% to 25 wt.-%, based on the total weight of component X.

The presence of a plasticizer, thickening agent as well as an antibacterial or biocidal agent does not change the overall inorganic nature of the cementitious component X.

Component X comprising the aluminous cement is present in aqueous-phase, preferably in form of a slurry or paste.

In the two-component mortar system according to the third aspect of the present invention, component Y further comprises an initiator, at least one retarder, at least one mineral filler and water.

Component Y comprises at least 0.01 wt.-%, preferably at least 0.05 wt.-%, more preferably at least 0.1 wt.-%, most preferably at least 1.0 wt.-%, from 0.01 wt.-% to 25 wt.-%, preferably from 0.05 wt.-% to 20 wt.-%, more preferably from 0.1 wt.-% to 15 wt.-%, most preferably from 1.0 wt.-% to 10 wt.-% of said expediting component, based on the total

weight of component Y.

The initiator preferably comprises a mixture of alkali and/or alkaline earth metal salts or mixtures thereof, more preferably the initiator comprises an alkali and/or earth alkali hydroxide and/or carbonate. Even more preferably, the initiator comprises a mixture of lithium metal salts.

Preferably, the initiator further comprises an activator component and/or an accelerator component. The activator component preferably comprises at least one alkali and/or alkaline earth metal salt selected from the list consisting of hydroxides, chlorides, sulfates, phosphates, monohydrogen phosphates, dihydrogen phosphates, nitrates, carbonates and mixtures thereof. More preferably the activator component is an alkali or alkaline earth metal salt, more preferably is a calcium metal salt, such as calcium hydroxide, calcium sulfate, calcium carbonate or calcium phosphate, a sodium metal salt, such as sodium hydroxide, sodium sulfate, sodium carbonate or sodium phosphate, or a lithium metal salt, such as lithium hydroxide, lithium sulfate, lithium carbonate or lithium phosphate, most preferably is lithium hydroxide. In one preferred embodiment the lithium hydroxide used in component Y is a 10% aqueous solution of lithium hydroxide.

Component Y preferably comprises at least 0.01 wt.-%, preferably at least 0.02 wt.-%, more preferably at least 0.05 wt.-%, most preferably at least 1 wt.-%, from 0.01 wt.-% to 40 wt.-%, preferably from 0.02 wt.-% to 35 wt.-%, more preferably from 0.05 wt.-% to 30 wt.-%, most preferably from 1 wt.-% to 25 wt.-% of said activator component, based on the total weight of component Y. In a particular preferred embodiment, the activator is comprised of water and lithium hydroxide.

The water content comprised in component Y is at least 1 wt.-%, preferably at least 5 wt.-%, more preferably at least 10 wt.-%, most preferably at least 20 wt.-%, from 1 wt.-% to 60 wt.-%, preferably from 5 wt.-% to 50 wt.-%, more preferably from 10 wt.-% to 40 wt.-%, most preferably from 15 wt.-% to 30 wt.-%, based on the total weight of component Y.

The lithium hydroxide content comprised in component Y is at least 0.1 wt.-%, preferably at least 0.5 wt.-%, more preferably at least 1.0 wt.-%, most preferably at least 1.5 wt.-%, from 0.1 wt.-% to 5 wt.-%, preferably from 0.5 wt.-% to 4 wt.-%, more preferably from 1.0 wt.-% to 3 wt.-%, most preferably from 1.5 wt.-% to 2.5 wt.-%, based on the total weight of component Y.

In a most preferred embodiment, component Y comprises from 2.0 wt.-% to 20 wt.-% of a 10% aqueous solution of lithium hydroxide, based on the total weight of component Y.

The accelerator component is constituted of at least one alkali and/or earth alkaline metal salt selected from the group consisting of hydroxides, chlorides, sulfates, phosphates, monohydrogen phosphates, dihydrogen phosphates, nitrates, carbonates and mixtures thereof, preferably the accelerator component is an alkali or earth alkaline metal salt, still preferably is a water-soluble alkali or earth alkaline metal salt, more preferably is a calcium metal salt, such as calcium hydroxide, calcium sulfate, calcium carbonate, calcium chloride, calcium formate or calcium phosphate, a sodium metal salt, such as sodium hydroxide, sodium sulfate, sodium carbonate, sodium chloride, sodium formate or sodium phosphate, or a lithium metal salt, such as lithium hydroxide, lithium sulfate, lithium sulfate monohydrate, lithium carbonate, lithium chloride, lithium formate or lithium phosphate, most preferably is lithium sulfate or lithium sulfate monohydrate. Component Y comprises at least 0.01 wt.-%, preferably at least 0.05 wt.-%, more preferably at least 0.1 wt.-%, most preferably at least 1.0 wt.-%, from 0.01 wt.-% to 25 wt.-%, preferably from 0.05 wt.-% to 20 wt.-%, more preferably from 0.1 wt.-% to 15 wt.-%, most preferably from 1.0 wt.-% to 10 wt.-% of said accelerator component, based on the total weight of component Y. It should be understood that the expediting composition present in the two-component mortar system according to the third aspect of the present invention should replace the lithium comprising accelerator component as much as possible, preferably entirely.

In an especially preferred embodiment of the third aspect of the present invention, the combined amount of accelerator component and expediting composition comprised in component Y is at least 0.01 wt.-%, preferably at least 0.05 wt.-%, more preferably at least 0.1 wt.-%, most preferably at least 1.0 wt.-%, from 0.01 wt.-% to 25 wt.-%, preferably from 0.05 wt.-% to 20 wt.-%, more preferably from 0.1 wt.-% to 15 wt.-%, most preferably from 1.0 wt.-% to 10 wt.-%, based on the total weight of component Y.

In a particular preferred embodiment of component Y of the third aspect of the present invention, the ratio of 10% aqueous solution of lithium hydroxide/lithium sulfate or lithium sulfate monohydrate is 7/1 or 6/1.

The at least one retarder comprised in component Y according to the present invention is selected from the group consisting of citric acid, tartaric acid, lactic acid, salicylic acid, gluconic acid and mixtures thereof, preferably is a mixture of citric acid and tartaric acid. Component Y comprises at least 0.1 wt.-%, preferably at least 0.2 wt.-%, more preferably at least 0.5 wt.-%, most preferably at least 1.0 wt.-%, from 0.1 wt.-% to 25 wt.-%, preferably from 0.2 wt.-% to 15 wt.-%, more preferably from 0.5 wt.-% to 15 wt.-%, most preferably from 1.0 wt.-% to 10 wt.-% of said retarder, based on the total weight of component Y.

In a particular preferred embodiment of component Y of the present invention, the ratio of citric acid/tartaric acid is 1.6/1.

The at least one mineral filler comprised in component Y according to the present invention is selected from the group consisting of limestone fillers, sand, crushed stones, gravels, pebbles and mixtures thereof, preferred are limestone fillers, such as various calcium carbonates. The at least one mineral filler is preferably selected from the group consisting of

limestone fillers or quartz fillers, such as quartz powder Millisil W12 or W6 (Quarzwerke GmbH, Germany) and quartz sand. The at least one mineral filler of component Y is most preferably a calcium carbonate or a mixture of calcium carbonates. Component Y comprises at least 30 wt.-%, preferably at least 40 wt.-%, more preferably at least 50 wt.-%, still more preferably at least 60 wt.-%, most preferably at least 70 wt.-%, from 30 wt.-% to 95 wt.-%, preferably from 35 wt.-% to 90 wt.-%, more preferably from 40 wt.-% to 85 wt.-%, still more preferably from 45 wt.-% to 80 wt.-%, most preferably from 50 wt.-% to 75 wt.-% of at least one mineral filler, based on the total weight of component Y. The at least one mineral filler is chosen to obtain a particle size complementary to that of the aluminous cement.

It is preferred that the at least one mineral filler has an average particle size of not more than 500 μm, more preferably of not more than 400 μm, most preferably not more than 350 μm.

In a particular preferred embodiment of the present invention, the at least one mineral filler comprised in component Y is mixture of three different calcium carbonates, i.e. calcium carbonate fines, such as different Omyacarb® types (Omya International AG, Germany). Most preferably, the first calcium carbonate has an average particle size (d50%) of 3.2 μm and a residue of 0.05% on a 45 μm sieve (determined according to ISO 787/7). The second calcium carbonate has an average particle size (d50%) of 7.3 μm and a residue of 0.5% on a 140 μm sieve (determined according to ISO 787/7). The third calcium carbonate has an average particle size (d50%) of 83 μm and a residue of 1.0% on a 315 μm sieve (determined according to ISO 787/7). In a particular preferred embodiment of component Y of the present invention, the ratio of first calcium carbonate/second calcium carbonate/third calcium carbonate is 1/1.5/2 or 1/1.4/2.2.

In a particular preferred alternative embodiment of the present invention, the at least one mineral filler comprised in component Y is mixture of three different quartz fillers. Most preferably, the first quartz filler is a quartz sand having an average particle size (d50%) of 240 μm. The second quartz filler is a quartz powder having an average grain size (d50%) of 40 μm. The third quartz filler is a quartz powder having an average grain size (d50%) of 15 μm. In a particular preferred embodiment of component Y of the present invention, the ratio of first quartz filler/second quartz filler/third quartz filler is 3/2/1.

In an advantageous embodiment, component Y further comprises the following characteristics, taken alone or in combination.

Component Y may additionally comprise a thickening agent. The thickening agent to be used in the present invention may be selected from the group consisting of bentonite, silicon dioxide, quartz, thickening agents based on acrylate, such as alkali-soluble or alkali-swellable emulsions, fumed silica, clay and titanate chelating agents. Exemplarily mentioned are polyvinyl alcohol (PVA), hydrophobically modified alkali soluble emulsions (HASE), hydrophobically modified ethylene oxide urethane polymers known in the art as HEUR, and cellulosic thickeners such as hydroxymethyl cellulose (HMC), hydroxyethyl cellulose (HEC), hydrophobically-modified hydroxy ethyl cellulose (HMHEC), sodium carboxymethyl cellulose (SCMC), sodium carboxymethyl 2-hydroxyethyl cellulose, 2-hydroxypropyl methyl cellulose, 2-hydroxyethyl methyl cellulose, 2-hydroxybutyl methyl cellulose, 2-hydroxyethyl ethyl cellulose, 2-hydroxypropyl cellulose, attapulgite clay, and mixtures thereof. Suitable thickening agents are commercially available products, such as Optigel WX (BYK-Chemie GmbH, Germany), Rheolate 1 (Elementis GmbH, Germany) and Acrysol ASE-60 (The Dow Chemical Company). Component Y comprises at least 0.01 wt.-%, preferably at least 0.05 wt.-%, more preferably at least 0.1 wt.-%, most preferably at least 0.3 wt.-%, from 0.01 wt.-% to 15 wt.-%, preferably from 0.05 wt.-% to 10 wt.-%, more preferably from 0.1 wt.-% to 5 wt.-%, most preferably from 0.3 wt.-% to 1 wt.-% of said thickening agent, based on the total weight of component Y.

The presence of a retarder and thickening agent does not change the overall inorganic nature of the cementitious component Y.

Component Y comprising the initiator and retarder is present in aqueous-phase, preferably in form of a slurry or paste.

It is preferred that the pH-value of component Y is above 10, more preferably above 11 and most preferably is above 12, in particular in the range between 10 and 14, preferably between 11 and 13.

The two-component mortar system according to any of the preceding claims 18 to 24, wherein the water to aluminous cement ratio (W/CAC), in the product obtained by mixing components X and Y is lower than 1.5, preferably between 0.3 and 1.2, most preferably between 0.4 and 1.0.

Moreover, it is particular preferred that the proportion of lithium in component Y is chosen so that the lithium to aluminous cement ratio (Li/CAC), in the product obtained by mixing components X and Y is lower than 0.05, preferably between 0.001 and 0.05, most preferably between 0.005 and 0.01.

Moreover, it is particular preferred that the proportion of retarder in component Y is chosen so that the citric acid/tartaric acid to aluminous cement ratio, in the product obtained by mixing components X and Y is lower than 0.5, preferably between 0.01 and 0.4, most preferably between 0.1 and 0.2.

Component X of the present invention may be prepared as follows: The blocking agent is mixed with water, so that the pH-value of the resulting mixture is 2. Plasticizer is added and the mixture homogenized. Aluminous cement, optionally calcium sulfate, and optionally mineral filler are premixed and added stepwise to the mixture whilst increasing the stirring speed, so that the pH-value of the resulting mixture is 4. Finally, thickening agent and antibacterial/biocidal agent are

added and mixed until complete homogenization of the mixture.

Component Y of the present invention may be prepared as follows: The accelerator component is dissolved in an aqueous solution of an activator component, followed by subsequent addition of retarder and homogenization of the mixture. The filler(s) is/are added stepwise whilst increasing the stirring speed until the mixture homogenizes. Finally, the thickening agent is added until complete homogenization of the mixture.

Component X and Y are present in aqueous phase, preferably in form of a slurry or paste. In particular, components X and Y have a pasty to fluid aspect according to their respective compositions. In one preferred embodiment, component X and component Y are in paste form thereby preventing sagging at the time of mixing the two components.

The weight ratio between component X and component Y (NB) is preferentially comprised between 7/1 and 1/3, preferably is 3/1. Preferably, the composition of the mixture comprises 75 wt.-% of component X and 25 wt.-% of component Y. In an alternative embodiment, the composition of the mixture comprises 25 wt.-% of component X and 75 wt.-% of component Y.

The two-component system is of mineral nature, which is not affected by the presences of additional thickening agents of other agents.

The shelf life of the two-component system depends on the individual shelf life of each of the respective components, in particular component X as well as component Y has a shelf life of at least six months at ambient temperature so as to protect the system from the storing and supply delays. Most preferably, component X and Y are individually stable for at least six months. The component X and Y were stored in tightly closed containers to avoid evaporation of water at 40 °C. and checked for any changes in fluidity, homogeneity, whether sedimentation occurs, and pH-value after several time intervals. The properties of all components remained unaffected after 6 months, thus the shelf life is at least 6 months at 40 °C.

In the multi-component mortar system, especially two-component mortar system, the volume ratio of cementitious component X to initiator component Y is 1:1 to 7:1, preferably is 3:1. In an alternative embodiment, the volume ratio of cementitious component X to initiator component Y is 1:3 to 1:2.

After being produced separately, component X and component Y are introduced into separate containers, from which they are ejected by means of mechanical devices and are guided through a mixing device. The two-component mortar system of the present invention is preferably a ready-for-use system, whereby component X and Y are separately arranged from each other in a multi-chamber device, such as a multi-chamber cartridge and/or a multi-chamber cylinder or in two-component capsules, preferably in a two-chamber cartridge or in two-component capsules. The multi-chamber system preferably includes two or more foil bags for separating curable component X and initiator component Y. The contents of the chambers or bags which are mixed together by a mixing device, preferably via a static mixer, can be injected into a borehole. The assembly in multiple chamber cartridges or pails or sets of buckets is also possible.

*Use of the two-component mortar system*

Finally, in a fourth aspect, the present invention is concerned with the use of a two-component mortar system according to the third aspect of the present invention for chemical fastening of anchoring means in mineral surfaces.

Therefore, the hardening aluminous cement prepared by mixing components X and Y of the two-component mortar system according to the third aspect of the present invention is inserted directly into the borehole, which is required accordingly for fastening the anchoring means, and has been initially introduced into the mineral surface, during the chemical fastening of anchoring means, whereupon the construction element to be fastened, for example an anchor rod, is inserted and adjusted, whereupon the mortar composition sets and hardens. In particular, the two-component system of the present invention is to be considered as a chemical anchor for fastening metal elements.

According to the fourth aspect of the present invention, the two-component mortar system according to the third aspect of the present invention can be used for chemical fastening of anchoring means, preferably of metal elements, such as anchor rods, in particular threaded rods, bolts, steel reinforcement bars or the like into mineral surfaces, such as structures made of brickwork, concrete, pervious concrete or natural stone. In particular, the two-component mortar system according to the third aspect of the present invention can be used for chemical fastening of anchoring means, such as metal elements, in boreholes. It can be preferably used for anchoring purposes encompassing an increase in the load capacity at temperatures above room temperature or at elevated temperatures, such as above 80° C, and/or encompassing an increase in the bond stress in the cured state. An increased temperature resistance results in a better operational capability for anchoring purposes also at higher temperatures, such as temperatures being present in the area of a borehole of facade anchorages, which are exposed to strong sunlight or otherwise elevated temperatures.

Moreover, according to the fourth aspect of the present invention the two-component mortar system according to the third aspect of the present invention may be preferably used for the attachment of fibers, scrims, fabrics or composites, in particular of high-modulus fibers, preferably of carbon fibers, in particular for the reinforcement of building structures, for example walls or ceilings or floors, or further for mounting components, such as plates or blocks, e.g. made of stone, glass or plastic, on buildings or structural elements.

## Measurement methods

The following measurement methods are used to quantify parameters in the examples of the present invention.

*(a) Solid content*

The solid content was measured with a moisture analyzer.

*(b) Calorimetry*

All calorimetry experiments were carried out using a thermostat temperature of 20.0 °C and a TAM Air isothermal calorimeter.

*Determination of $t_{onset}$ and $\Delta t$*

The sample is put into an ampoule, the ampoule is sealed and placed into the calorimeter within a time period of 10 min after mixing the sample.

The main objective of the measurement is to determine the speed of the hydration of CAC. As the hydration rate of cement corresponds to the released heat flow of the cement paste, a fast curing of the paste can be derived from an early heat evolution event in the isothermal calorimeter.

Thus, the start of the main heat evolution in the cement ($t_{onset}$) is determined by the intersection of two straight lines (cf. Figure 1). The first line describes the level at the minimum plateau between the initial dissolution of the cement paste and the main heat evolution. The second line presents the maximum slope of the main heat evolution. The difference between the respective $t_{onset}$ value of the inventive or comparative example and the $t_{onset}$ value of the reference/blank sample yields $\Delta t$ (cf. Table 6). A negative value indicates an accelerating effect of the applied example and a positive value a decelerating effect.

*(c) X-ray Diffraction*

XRD patters were recorded on a Bruker AXS D8 Advance instrument (Bruker, Karlsruhe, Germany) with a Bragg-Brentano θ-2θ geometry equipped with a V°ANTEC-1 LPSD detector (12° 2θ detector opening) and Cu $K\alpha_{1,2}$ source (1.5406 Å, 32 kV, 40 mA). Data was collected between 7° and 42° 2θ as all relevant reflexes appear within this range.

*Sample preparation*

To obtain a powder for the XRD measurement, the suspensions of IE1-4 were centrifuged. The supernatant was decanted, and the sediment was dried in vacuum to obtain a dry specimen. The specimens were gently crushed using a pistil and a mortar. The powders were transferred onto a sample holder and the XRD patterns were recorded using the Bruker AXS D8 Advance.

*(d) Transmission Electron Microscopy*

The specimens were placed on a copper grid with 300 mesh and then observed with JEOL JEM-1400 Plus TEM (JEOL) at 120 kV (equipped with a RUBY CCD camera).

To determine the size (length and thickness) of the individual particles the Feret diameter (described by the longest dimension of the particles between two tangents on opposite sides of the particles) is used, which is commonly applied to irregular shaped crystals, grains, etc. (cf. K. Scrivener, R. Snelling, B. Lothenbach, A Practical Guide to Microstructural Analysis of Cementitious Materials, CRC Press, 2016; Test Method 2B.5 Analysis of Calcium Aluminate Cement Hydrates by Thermal Gravimetric Analysis, University of Sydney, Marjorie Valix, 2020.)

To measure the Feret diameter the image processing software (FiJi Is Just) ImageJ 2.14.0/1.54f was used. The particles were measured manually according to the following procedure.

The image is loaded into the software and the correct scale is applied (Analyze - > Set scale). A particle with recognizable edges and properly color contrast is selected with the *"freehand selection"* and added to the result file (the software automatically returns the Feret diameter for this particle). The last step is repeated until no further particle is visible to the operator. The straight-line tool is used to determine the thickness of the particles. The last step is repeated until no further flake was visible to the operator. Octahedral shaped crystals with several hundred nanometers in diameter are not considered in the evaluation (cf. Figure 14 for a graphical illustration of the image analysis procedure).

To statistically describe the frequency distribution of individual particles in the sample the weight average particle

size (Feret diameter $FD_w$ or thickness $T_w$, respectively) is determined (n = total number of measured particles).

$$FD_w = \sum_i^n \frac{{FD_i}^2}{FD_i} \quad \text{and} \quad T_w = \sum_i^n \frac{{T_i}^2}{T_i}$$

Furthermore, the number average particle size ($FD_n$ and $T_n$) and median particle size ($FD_m$ and $T_m$) are determined. The ratio of $FD_w/FD_n$ (or $T_w/T_n$) displays the dispersity (polydispersity index, PDI) and describes the width of this distribution. These concepts are derived from the chemistry of polymers (K. D. Lechner, K. Gehrke, E. H. Nordmeier: Makromolekulare Chemie: ein Lehrbuch für Chemiker, Physiker, Materialwissenschaftler und Verfahrenstechniker, 5. Auflage, Springer Spektrum, Berlin 2014).

*(e) Thermal Gravimetric Analysis (TGA)*

*General remarks*

Thermal gravimetric analysis is usually used to follow the hydration process of cementitious materials by recording the weight loss of a material. It is also used to calculate the amount of a single material in a mixture of solids.

However, this technique is limited to systems with one to two solids present, as the recorded weight loss of the individual materials can overlap, complicating the quantitative analysis.

One can present TGA data in two ways: The first way shows the thermogravimetric (thermal gravimetric) change as a function of increasing temperature, the second way describes the differentiation of the TG curve (DTG). By applying deconvolution methods to the DTG the observed overlapping thermal transitions can be resolved to a certain degree.

*Sample preparation*

Samples for TGA measurements were prepared according to the following procedure. 3 g of the respective expediting composition (in suspension) were mixed with 7 g cold (5 °C) isopropanol. The mixture was vigorously shaken by hand for two to three minutes and then placed in an overhead shaker (15 rpm) for 15 min. Subsequently, the mixture was centrifuged for 5 min at 8500 g. The clear supernatant was decanted, and the remaining solvent was removed in vacuum overnight. The dried powder was gently crushed using a pistil and mortar and characterized with TGA as soon as possible.

*Measurement*

The observed DTG data was deconvoluted using a pseudo-Voigt profile (PVP). The thermal analysis was performed on a STA 409 TG-MS instrument (Netzsch, Selb, Germany) from 30 °C to 1000 °C at a heating rate of 10 °C/min in Argon flow. 10 mg of sample was placed in the aluminum oxide crucible. The crucible was covered with a lid, which had a small opening in it.

The DTG curves were iteratively adjusted until the $R^2$ score was higher than 0.98 and the found ratio between the different phases for each suspension was in an acceptable range. The maximum position of the individual phases wass adapted from the literature (Test Method 2B.5 Analysis of Calcium Aluminate Cement Hydrates by Thermal Gravimetric Analysis, University of Sydney, Marjorie Valix, 2020; N. Ukrainczyk, T. Matusinovic, S. Kurajica, B. Zimmerman, J. Sipusic, Dehydration of layered double hydroxide - C2AH8, Thermochimica Acta 464 (2007) 7 - 15)). The used polymer was also characterized in its air-dried form by TGA showing its maximum value at 400 °C (decomposition of polymer).

The ratio between the different phases is determined according to the following reaction pathways (based on the found phases in the XRD measurement): 3 CA + 21 H → $CAH_{10}$ + $C_2AH_8$ + $AH_3$ or 2 CA + 11 H → $C_2AH_8$ + $AH_3$ Cement notation is used (C = CaO, A = $Al_2O_3$, H = $H_2O$).

By determining the theoretical amount of each phase according to following equation (MW = molecular weight in g/mol) the ratio between the different phases can be determined.

$$\text{Theoretical amount of } CAH_{10} = MW_{CAH10} / (MW_{CAH10} + MW_{C2AH8} + MW_{AH3})$$

$$\text{Theoretical amount of } C_2AH_8 = MW_{C2AH8} / (MW_{CAH10} + MW_{C2AH8} + MW_{AH3})$$

$$\text{Theoretical amount of } AH_3 = MW_{AH3} / (MW_{CAH10} + MW_{C2AH8} + MW_{AH3})$$

The ratio between the different phases is given by $CAH_{10}/C_2AH_8$ (= 0.94), $CAH_{10}/AH_3$ (= 2.17), $C_2AH_8/AH_3$ (=

2.30). The reaction of the slowly reacting calcium aluminate phase $CA_2$ (Grossite) is not considered in the equation. The amount of polymer is determined based on the area for the polymer in relation to the total area. The amount of the different phases is based on the pseudo-Voigt profiles in combination with the water loss of the respective phases.

## Examples

The following example illustrates the invention without thereby limiting it.

*(a) Comparative Examples CE1-2*

*Common preparation method (co-precipitation)*

Water and polymer solution (A) (cf. Table 1) were placed in a 100 mL beaker and stirred at 300 rpm using a cylindrical shaped magnetic stirrer. The polymer solution (A) is a commercially available polymer solution (comb-shaped copolymer) with a solid content of 45% (Melpers® 0045). Subsequently, a calcium solution (C) and an aluminum solution (B) were added dropwise in a time period of 10 min into the beaker and the mixture was stirred for additional 5 min after the addition had been finished. As $Al^{3+}$ source, a $NaAlO_2$ solution (B) was used, with a solid content of 29%. Two different $Ca^{2+}$ sources (C) were tested for the co-precipitation method. A $Ca(NO_3)_2$ (C1) and a $CaCl_2$ (C2) solution, both with a solid content of 25%. 0.02 mol of the respective calcium salt were added. To yield the $C_2AH_8$ phase a Ca/Al molar ratio of 1 was chosen. The polymer amount in the aqueous polymer solution refers to 10 wt.-% with respect to the amount of calcium and aluminum ions added. The amount of water present in the beaker is adjusted to reach a final solid content of 15%. The samples were stored in glass vials at room temperature and their solid content is determined after one day after synthesis. In all comparative examples CE1-2 white, opaque suspensions that show sedimentation over time have been achieved.

*CE1-2*

The comparative examples have been prepared according to the common preparation method as described above under considerations of the amounts given in Table 1.

*Table 1: Details of synthesis conditions use for CE1-2 (co-precipitation method). A: polymer solution (solid content: 45 %), B: $NaAlO_2$ solution (solid content: 29 %), C1: $Ca(NO_3)_2$ solution (solid content: 25 %), C2: $CaCl_2$ solution (solid content: 25 %).*

| | water [g] | A [g] | B [g] | C1 [g] | C2 [g] | solid content [%] |
|---|---|---|---|---|---|---|
| CE1 | 14.62 | 0.30 | 5.65 | 13.13 | 0.00 | 14.9 |
| CE2 | 11.79 | 0.30 | 5.65 | 0.00 | 8.88 | 15.5 |

*(b) Inventive Examples IE1-4, Comparative Examples CE3-5*

*Common preparation method (one-pot reaction)*

Water and the desired amount of polymer solution (A) (cf. Table 2) were placed in a 1 L round bottom flask and stirred at 800 rpm using an ellipse shaped magnetic stirrer. The polymer solution (A) is a commercially available polymer solution (comb-shaped copolymer) with a solid content of 45% (Melpers® 0045). Subsequently, white calcium aluminate cement (CAC) commercially available as Ternal® White was added into the reaction mixture. The weight ratio of water to CAC is kept at 10 for IE1, at 8.2 for IE2, at 8.25 for IE3, and at 8.3 for IE4. The solid polymer content in the polymer solution is adjusted to obtain a weight ratio of polymer to CAC of 9.99:1, 19.98:1, 505.05:1, 49.94:1, 33.42:1, and 24.97 for examples CE4, CE5, IE1, IE2, IE3, and IE4 while example CE3 does not comprise any polymer. The suspensions were stirred for 48 h with 800 rpm at room temperature and subsequently stored in polyethylene containers at room temperature. The solid content of the respective suspensions is determined one day after synthesis.

*Examples*

The inventive examples and comparative example 3 have been prepared according to the common preparation method as described above under considerations of the amounts given in Table 2. The appearance of the respective reaction mixtures is also described in Table 2.

*Table 2 Details of synthesis conditions for the comparative examples and inventive examples using the dissolution method. A: polymer solution (solid content: 45 %).*

| | water [g] | A [g] | CAC [g] | solid content [%] | Optical appearance | Sedimentation |
|---|---|---|---|---|---|---|
| CE3 | 500.00 | 0.00 | 50.00 | 15.2 | opaque, white suspension | yes |
| CE4 | 493.88 | 11.12 | 50.00 | 12.0 | opaque, white suspension | yes |
| CE5 | 496.94 | 5.56 | 50.00 | 11.6 | opaque, white gel | no |
| IE1 | 499.88 | 0.22 | 50.00 | 11.9 | opaque, white suspension | yes |
| IE2 | 487.51 | 2.67 | 59.92 | 14.6 | opaque, white suspension | yes |
| IE3 | 486.81 | 3.95 | 59.34 | 14.9 | opaque, white suspension | yes |
| IE4 | 486.10 | 5.23 | 58.77 | 14.7 | opaque, white suspension | yes |

To study the composition of the expediting compositions, powder X-ray diffraction (PXRD) measurements were conducted to qualitatively determine the phases obtained via the dissolution method.

The XRD patterns of IE1, CE3-5 (cf. Figures 7-10) show that the main clinker phase of calcium aluminate cement, calcium aluminate (CA), has completely hydrated after 48 h (main reflex 30.08 2θ). The second main clinker phase of the CAC, calcium dialuminate ($CA_2$), is still present to some extent (main reflex 25.46 2θ) after 48 h. IE4 (cf. Figure 9) shows the hydrate phase $C_2AH_8$ (main reflex 8.26 2θ, reflex position adapted from N. Ukrainczyk, T. Matusinovic, S. Kurajica, B. Zimmermann, J. Sipusic, Thermochimica Acta 2007, 464, 7-15) or similar forms of this hydrate phase (e.g. $C_2AH_{7.5}$, $C_2AH_{8.2}$). The hydrate phase $CAH_{10}$ is not observed in this sample (main reflex 6.0 2θ, second reflex 12.4 2θ). $AH_3$ is not observed. CE5 (cf. Figure 10) shows also no $CAH_{10}$, but $AH_3$ (main reflex 18.1 2θ). As the two peaks for $AH_3$ are very broad, the formation of very small/poorly crystalline/amorphous $AH_3$ crystals may be indicated. IE1 (cf. Figure 7) and CE3 (cf. Figure 8) also show $CAH_{10}$ next to $C_2AH_8$, $AH_3$ and $CA_2$.

Table shows respective results obtained via TGA.

*Table 1 Quantitative analysis of phase distribution for the different calcium aluminate cement suspension obtained from TGA measurement and pseudo-Voigt profiles.*

| | | IE1 | IE2 | IE3 | IE4 | CE3 | CE4 | CE5 |
|---|---|---|---|---|---|---|---|---|
| $CAH_{10}$ | [wt.-%] | 32 | - | - | - | 34 | - | - |
| $C_2AH_8$ | [wt.-%] | 49 | 63 | 68 | 66 | 47 | 68 | 70 |
| $AH_3$ | [wt.-%] | 19 | 33 | 27 | 26 | 19 | 24 | 24 |
| Polymer | [wt.-%] | - | 4 | 5 | 8 | - | 8 | 6 |
| $CAH_{10}/C_2AH_8$ | | 0.65 | - | - | - | 0.71 | - | - |
| $CAH_{10}/AH_3$ | | 1.62 | - | - | - | 1.73 | - | - |
| $C_2AH_8/AH_3$ | | 2.50 | 1.94 | 2.56 | 2.48 | 2.44 | 2.88 | 2.84 |
| $R^2$ score | | 0.99 | 1.00 | 0.99 | 1.00 | 0.99 | 1.00 | 1.00 |

To study the size and morphology of the particles of the expediting compositions, transmission electron microscopy has been used. Samples with no polymer present and samples with polymer present were investigated. In case of samples with polymer, only the supernatant of the sample was studied (no homogenization of serum and sediment took place by shaking the suspension before collecting the sample for TEM measurements).

Generally, the morphology of the found solid particles can be described as irregular flakes (straight and buckled ones) with varying sizes in the nanometer regime for both polymer-free and polymer-containing samples. The flakes have the tendency to agglomerate and build larger flocks of flakes in the micrometer regime. For the sample with no polymer present, additional, large, octahedral crystals with the size of several hundred nanometers up to a few micrometers have been observed. It is believed that they concern katoite phase ($C_3AH_6$), which was not detected by the XRD measurements. These octahedral crystals were not observed in the serum of the polymer-containing sample.

*Table 4: Feret diameter values of the particles of the expediting compositions.*

| Sample | $FD_w$ / nm | $FD_n$ / nm | PDI | $FD_m$ / nm |
|---|---|---|---|---|
| IE1 | 67 | 50 | 1.35 | 45 |

(continued)

| Sample | $FD_w$ / nm | $FD_n$ / nm | PDI | $FD_m$ / nm |
|---|---|---|---|---|
| IE2 | 99 | 59 | 1.69 | 40 |
| IE3 | 60 | 45 | 1.33 | 38 |
| IE4 | 57 | 45 | 1.25 | 40 |
| CE3 | 70 | 55 | 1.28 | 52 |
| CE4 | 53 | 45 | 1.17 | 42 |

*Table 5: Particles thickness values determined for the particles of the expediting compositions.*

| Sample | $T_w$ / nm | $T_n$ / nm | PDI | $T_m$ / nm |
|---|---|---|---|---|
| IE1 | 5 | 4 | 1.18 | 4 |
| IE2 | 5 | 4 | 1.23 | 4 |
| IE3 | 4 | 4 | 1.17 | 3 |
| IE4 | 4 | 3 | 1.14 | 3 |
| CE3 | 8.1 | 6.8 | 1.18 | 6.1 |
| CE4 | 2.8 | 2.5 | 1.09 | 2.5 |

*(c) Reference Example 1, Comparative Examples 6-10, Inventive Examples 5-8*

To study the hydration of the calcium aluminate cement (CAC) in absence (reference example 1 - RE1) and presence of the respective synthesized calcium aluminate hydrate suspensions (IE5-8 using IE1-4; CE610 using CE1-5), isothermal calorimetry experiments were carried out.

CAC and a fine corundum ($Al_2O_3$) commercially available as Nabalox NO 713-10 MF, were mixed with the appropriate amount of water and the herein synthesized expediting compositions as prepared in IE1-4 and CE1-5 (cf. Table 5). The mixing has been done mechanically with an overhead-stirrer (IKA® EUROSTAR 20 digital) equipped with a four-bladed propeller at 800 rpm for 2 min. After mixing, about six grams of the paste are transferred into a glass ampoule and $t_{onset}$ and $\Delta t$ are measured as set out under the section *"measurement method"* above.

*Table 6: Reference, comparative, and inventive examples studied in isothermal calorimetry. The $t_{onset}$ values describe the start of the main heat event and $\Delta t$ presents the effect of used additive sample (negative values show an accelerating effect, positive values show a retarding effect).*

| | Expediting composition | [g] | CAC [g] | $Al_2O_3$ [g] | Water [g] | $t_{onset}$ [h] | $\Delta t$ [h] |
|---|---|---|---|---|---|---|---|
| RE1 | none | none | 9.00 | 6.00 | 6.00 | 4.50 | - |
| IE5 | IE1 | 3.03 | 9.00 | 6.00 | 3.33 | 1.00 | -3.50 |
| IE6 | IE2 | 2.51 | 9.00 | 6.00 | 3.86 | 1.00 | -3.50 |
| IE7 | IE3 | 2.49 | 9.00 | 6.00 | 3.88 | 1.25 | -3.25 |
| IE8 | IE4 | 2.55 | 9.00 | 6.00 | 3.82 | 1.25 | -3.25 |
| CE6 | CE1 | 2.42 | 9.00 | 6.00 | 3.94 | 17.0 | 12.5 |
| CE7 | CE2 | 2.33 | 9.00 | 6.00 | 4.03 | 36.0 | 31.5 |
| CE8 | CE3 | 2.37 | 9.00 | 6.00 | 3.99 | 1.50 | -3.00 |
| CE9 | CE4 | 3.00 | 9.00 | 6.00 | 3.36 | 1.25 | -3.25 |
| CE10 | CE5 | 3.11 | 9.00 | 6.00 | 3.25 | 1.10 | -3.40 |

As can be seen by the data provided by Table 6, the addition of the expediting composition according to the present invention (IE1) leads to an accelerating effect of the hardening reaction of CAC in comparison to CAC without any expediting composition. This can be shown by the lower $t_{onset}$ values of examples IE5-8 using IE1-4 compared to RE1 using no expediting composition (cf. Table 6). The heat flow curves for the individually tested systems using the expediting

composition according to the present invention (IE5) can be found in Figure 3.

For the expediting compositions as prepared in CE1-2, a strong decelerating effect can be detected in the isothermal calorimeter by showing higher $t_{onset}$ values compared to RE1 with no expediting composition present (cf. Table 6). The heat flow curves for the individually tested systems using the comparative examples CE1-2 can be found in Figure 5 and 6.

However, also the comparative example using only water and no dispersant for the preparation of the expediting composition (CE3), while showing negative $t_{onset}$ values, still shows worse values than the inventive examples. The heat flow curve for the individually tested systems using CE3 can be found in Figure 4.

For the expediting compositions as prepared in CE4-5, which involve a comparable process as used for the inventive examples IE1-4, but which have a CAC:polymer ratio below 20:1, comparable or lower acceleration value can be observed, wherein the expediting composition loading of C4-5 is higher than in case of the inventive examples. Inventive Example IE6 shows at the second lowest expediting composition loading the best accelerating effect of all examples. The heat flow curves for the individually tested systems using the comparative example CE5 can be found in Figure 2.

**Claims**

1. Expediting composition suitable for accelerating the curation of a mortar comprising aluminous cement obtainable by a process, wherein the process comprises mixing the following components:

   A) aluminous cement,
   B) at least one dispersant agent for dispersing inorganic particles in water,
   C) water,
   wherein the weight ratio of component A) to component C) is in the range of from 1.5:1 to 1:70, and
   wherein the weight ratio of component A) to component B) is more than 20:1.

2. The expediting composition according to claim 1, wherein the at least one dispersant is a water-soluble polymer having polyether groups according to the structural unit (I),

   $$*\text{-U-(C(O))}_k\text{-X-(AlkO)}_n\text{-W} \qquad \text{(I)}$$

   wherein

   * denotes the binding site to the polymer,
   U denotes a chemical bond or an alkylene group with 1 to 8 C-atoms,
   X denotes oxygen, sulfur, or a group $NR^1$,
   k is 0 or 1,
   n is an integer whose mean value, relative to the polymer, is in the range from 3 to 300,
   Alk denotes an $C_2$-$C_4$-alkylene, wherein Alk of the group $(Alk\text{-}O)_n$ can be the same or different,
   W denotes a hydrogen radical, a $C_1$-$C_6$ alkyl radical, or an aryl radical, or denotes the group Y-F, wherein
   Y denotes a linear or branched alkylene group containing 2 to 8 carbon atoms which may bear a phenyl ring,
   F denotes a 5- to 10-membered nitrogen heterocycle, which may in addition to the nitrogen atom and in addition to carbon atoms have as ring members 1, 2, or 3 additional heteroatoms selected from the group consisting of oxygen, nitrogen, and sulfur, wherein the nitrogen ring members may have a group $R^2$, and wherein 1 or 2 carbon ring members may be present as a carbonyl group,
   $R^1$ denotes hydrogen, $C_1$-$C_4$-alkyl, or benzyl, and
   $R^2$ denotes hydrogen, $C_1$-$C_4$-alkyl or benzyl.

3. The expediting composition according to claims 1 or 2, wherein the at least one dispersant comprises at least one functional group selected from the list consisting of carboxyester-, carboxy-, phosphono-, sulfino-, sulfo-, sulfamido-, sulfoxy-, sulfoalkyloxy-, sulfinoalkyloxy- and phosphonooxy group.

4. The expediting composition according to any of the preceding claims, wherein the at least one dispersant comprises a polycondensation product comprising

   (II) a structural unit comprising an aromatic or heteroaromatic unit and a polyether group,
   (III) a phosphated structural unit comprising an aromatic or heteroaromatic unit.

5. The expediting composition according to any of the preceding claims, wherein component A) is selected from a list consisting of a mixture of $Al(OH)_3$ with CaO and/or $Ca(OH)_2$, calcium aluminate cement, or a mixture thereof.

6. The expediting composition according to any of the preceding claims, wherein the expediting composition has a solids content in the range of from 4% to 45%, preferably in the range of from 5% to 25%, more preferably in the range of from 10% to 20%, and most preferably in the range of from 12% to 18%.

7. The expediting composition according to any of the preceding claims, wherein the expediting composition comprises nano-sized particles, wherein the nano-sized particles preferably have an average Feret diameter larger than 55 nm, more preferably equal to or larger than 60 nm, even more preferably equal to or larger than 65 nm, and most preferably larger than 70 nm, and wherein the nano-sized particles preferably have an average Feret diameter smaller than 150 nm, more preferably smaller than 130 nm, even more preferably smaller than 110 nm, and most preferably smaller than 100 nm, measured according to the method as described in the description.

8. Use of a composition according to any of the preceding claims for accelerating the curing of a mortar comprising aluminous cement, preferably a cement selected from a list consisting of a mixture of $Al(OH)_3$ with CaO and/or $Ca(OH)_2$, calcium aluminate cement, or a mixture thereof.

9. A two-component mortar system comprising a curable aqueous-phase aluminous cement component X and an activator component Y in aqueous-phase suitable for initiating the curing process, wherein component Y comprises the expediting composition according to any of the preceding claims 1 to 7.

10. The two-component mortar system according to claim 9, component X further comprising at least one blocking agent selected from the group consisting of phosphoric acid, metaphosphoric acid, phosphorous acid and phosphonic acids, at least one plasticizer and water.

11. The two-component mortar system according to any of the preceding claims 9 or 10, wherein component Y further comprises an initiator, preferably an initiator comprising an alkali and/or alkaline earth metal salt or mixtures thereof, more preferably an initiator comprising an alkali and/or earth alkali hydroxide and/or carbonate.

12. The two-component mortar system according to any of the preceding claims 9 to 11, wherein the shelf life of component X and component Y is at least six months.

13. The two-component mortar system according to any of the preceding claims 9 to 12, wherein the pH-value of component Y is above 10.

14. Use of the two-component mortar system according to any of the preceding claims 9 to 13 for chemical fastening of anchoring means in mineral surfaces.

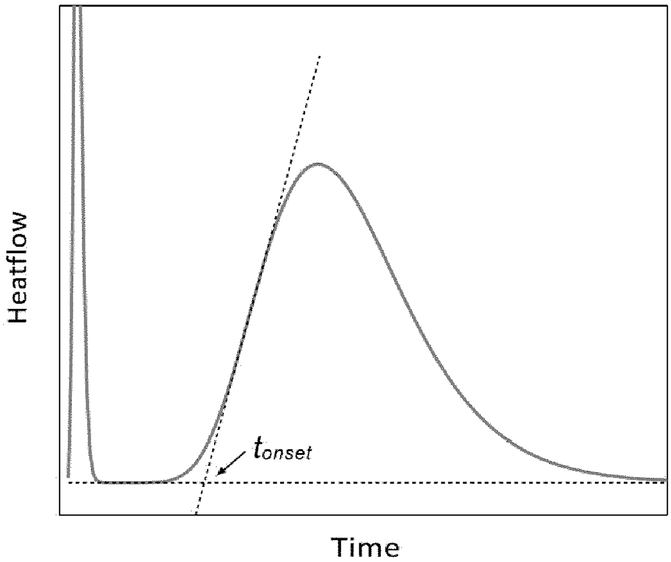


Figure 1

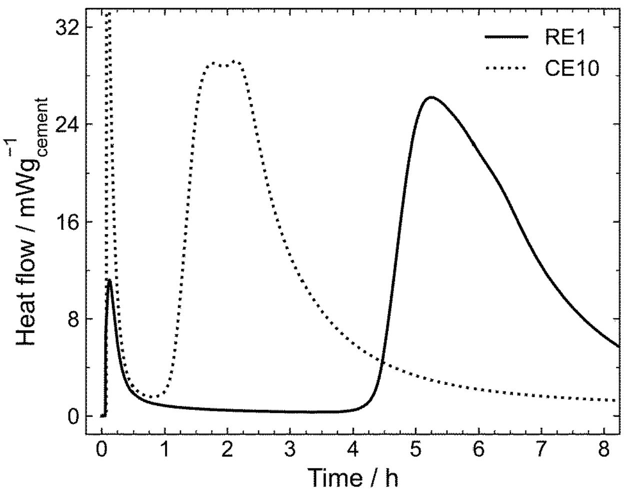


Figure 2

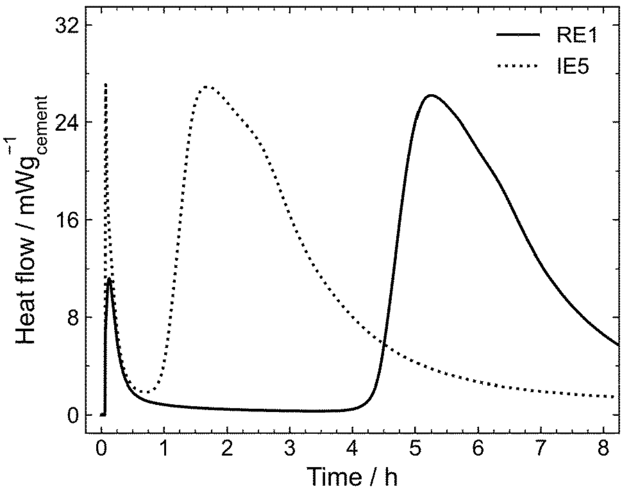


Figure 3

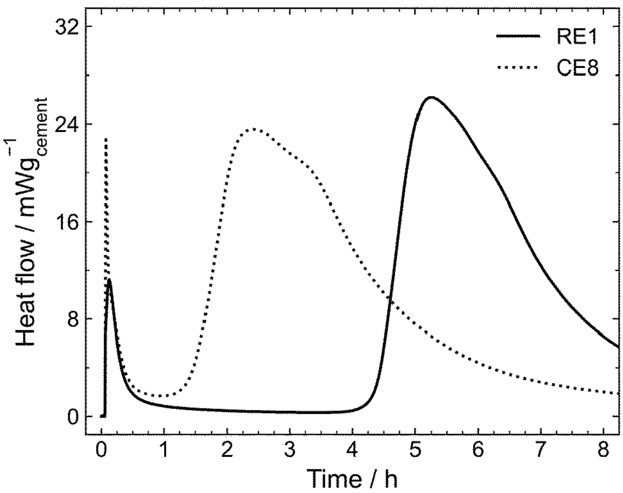


Figure 4

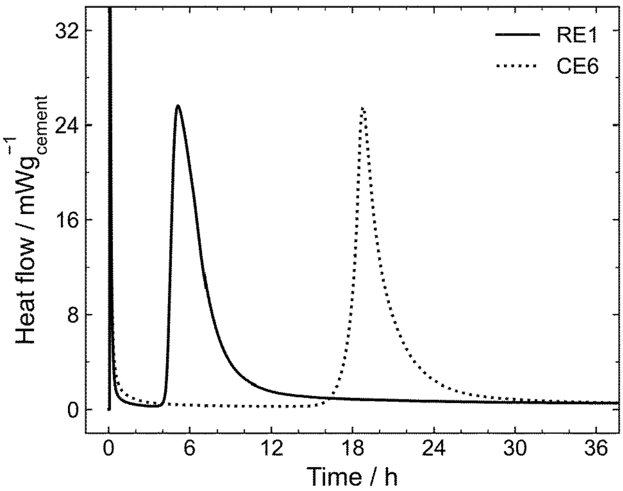


Figure 5

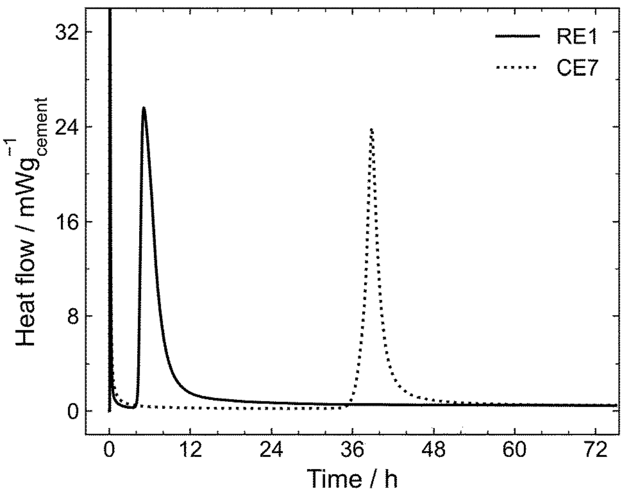


Figure 6

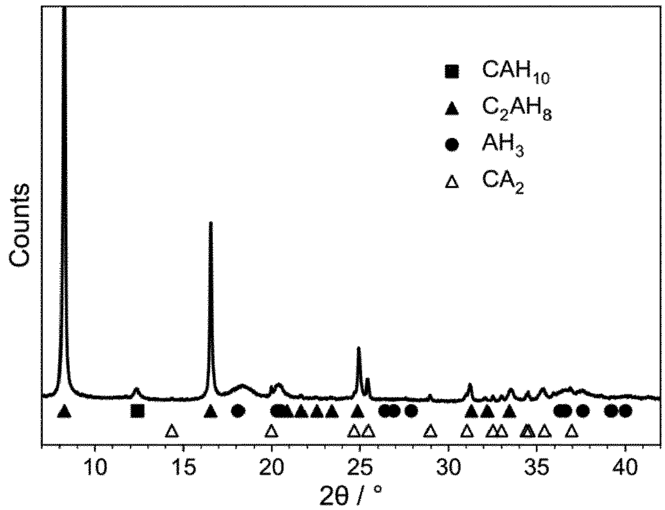


Figure 7

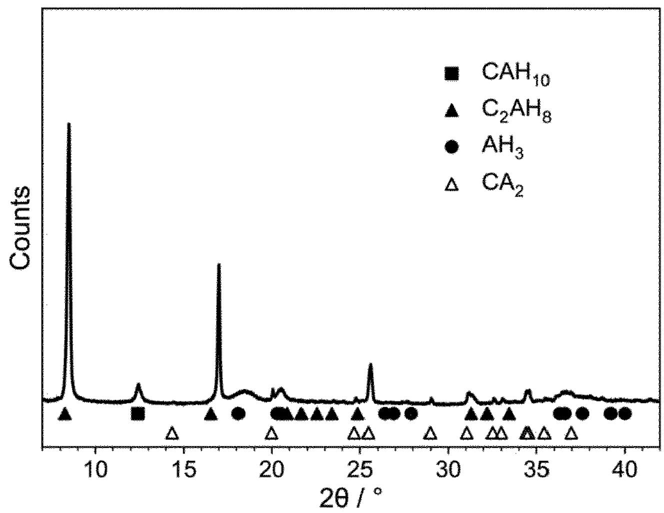


Figure 8

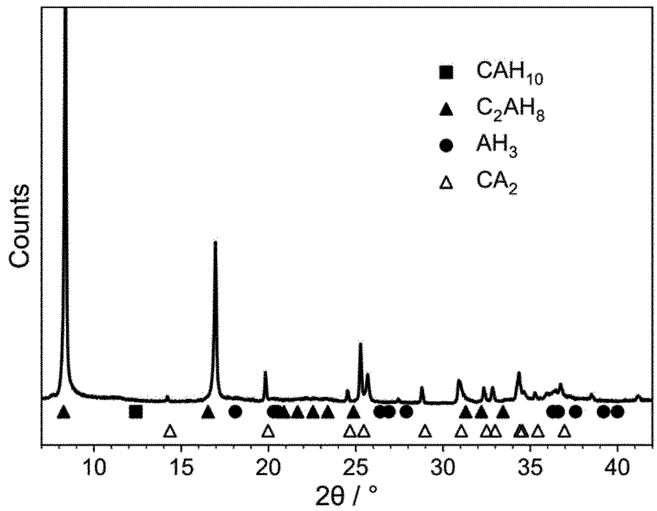


Figure 9

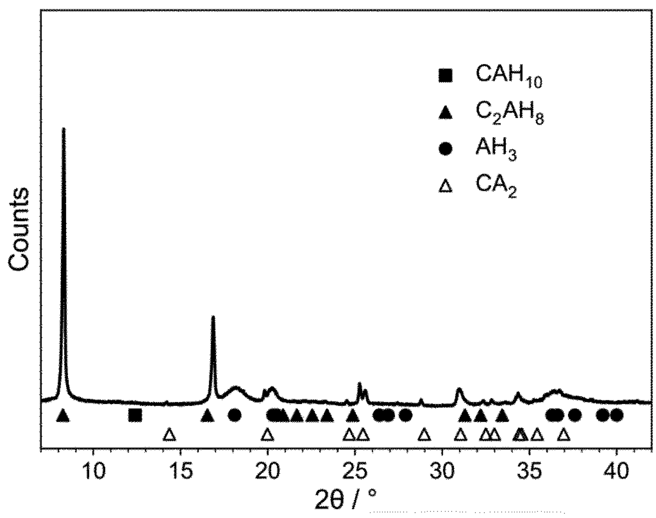


Figure 10

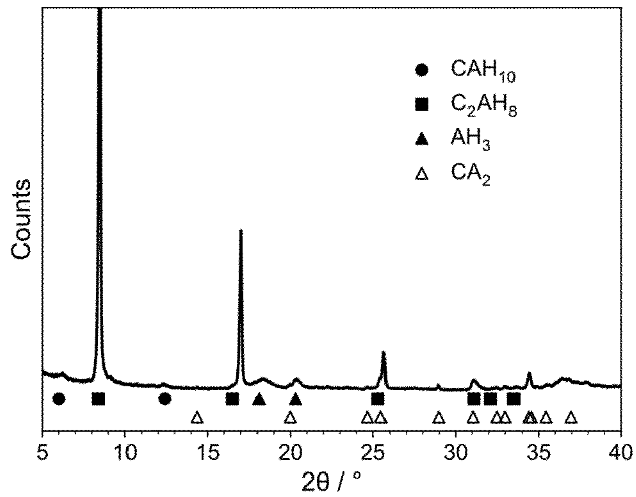


Figure 11

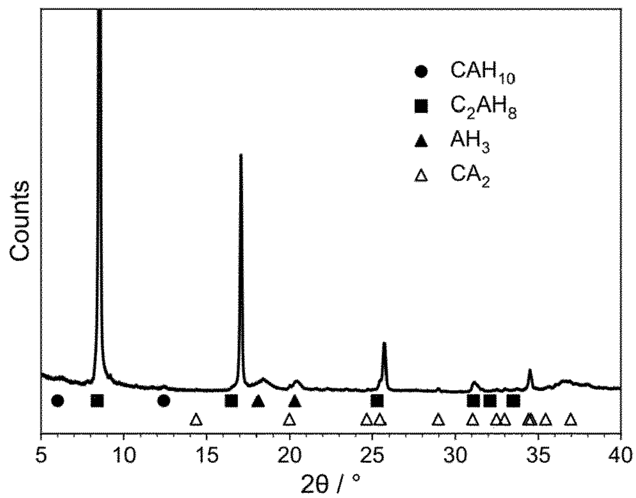


Figure 12

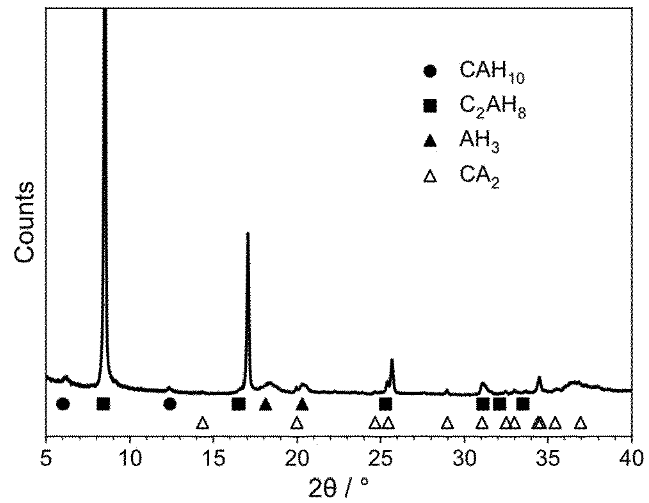


Figure 13

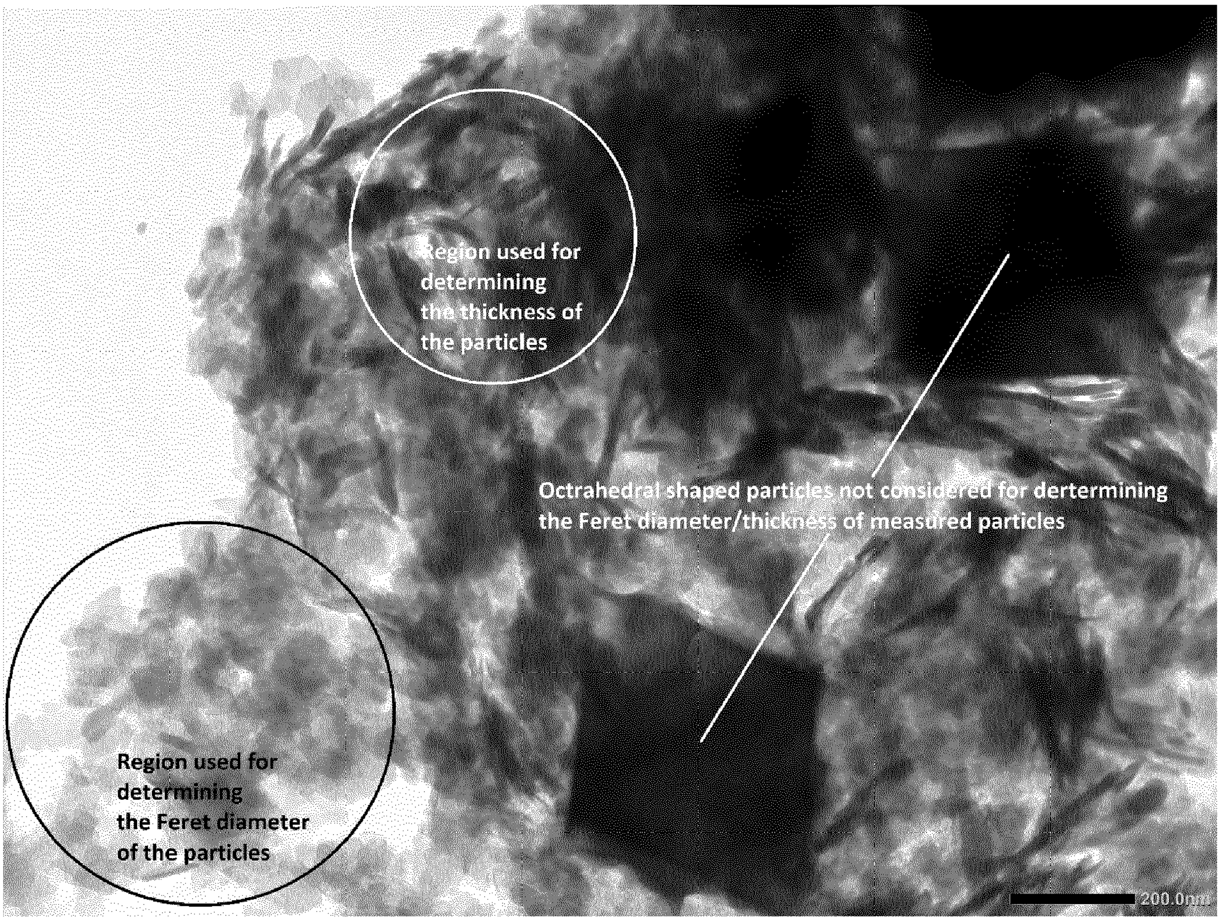


Figure 14

Europäisches Patentamt
European Patent Office
Office européen des brevets

# EUROPEAN SEARCH REPORT

Application Number
EP 23 21 7702

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 2017/032719 A1 (BASF SE [DE])<br>2 March 2017 (2017-03-02)<br>* paragraphs [0006] to [0080], [0106], [0114], [0115], claims * | 1-8<br>9-14 | INV.<br>C04B28/06<br>C04B40/00 |
| Y,D | WO 2017/067953 A1 (HILTI AG [LI])<br>27 April 2017 (2017-04-27)<br>* claims * | 9-14 | |
| A | WO 2010/026155 A1 (CONSTR RES & TECH GMBH [DE]; NICOLEAU LUC [DE] ET AL.)<br>11 March 2010 (2010-03-11)<br>* the whole document * | 1-14 | |

TECHNICAL FIELDS SEARCHED (IPC)

C04B

The present search report has been drawn up for all claims

| Place of search | Date of completion of the search | Examiner |
|---|---|---|
| Munich | 20 June 2024 | Nemes, Csaba A. |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 21 7702

This annex lists the patent family members relating to the patent documents cited in the above-mentioned European search report. The members are as contained in the European Patent Office EDP file on
The European Patent Office is in no way liable for these particulars which are merely given for the purpose of information.

20-06-2024

| Patent document cited in search report | Publication date | Patent family member(s) | Publication date |
|---|---|---|---|
| WO 2017032719 A1 | 02-03-2017 | AU 2016313046 A1 | 22-03-2018 |
| | | CA 2995745 A1 | 02-03-2017 |
| | | CN 107922278 A | 17-04-2018 |
| | | EP 3337772 A1 | 27-06-2018 |
| | | JP 7277139 B2 | 18-05-2023 |
| | | JP 2018525316 A | 06-09-2018 |
| | | RU 2730545 C1 | 24-08-2020 |
| | | US 2019263720 A1 | 29-08-2019 |
| | | WO 2017032719 A1 | 02-03-2017 |
| WO 2017067953 A1 | 27-04-2017 | AU 2016342204 A1 | 22-03-2018 |
| | | BR 112018007578 A2 | 23-10-2018 |
| | | CA 3000914 A1 | 27-04-2017 |
| | | CL 2018001020 A1 | 13-07-2018 |
| | | CN 108137423 A | 08-06-2018 |
| | | EP 3365307 A1 | 29-08-2018 |
| | | EP 3572388 A1 | 27-11-2019 |
| | | ES 2743556 T3 | 19-02-2020 |
| | | HK 1252229 A1 | 24-05-2019 |
| | | JP 6564557 B2 | 21-08-2019 |
| | | JP 2019500297 A | 10-01-2019 |
| | | KR 20180069009 A | 22-06-2018 |
| | | MY 186098 A | 21-06-2021 |
| | | PL 3365307 T3 | 31-03-2020 |
| | | RU 2018118381 A | 22-11-2019 |
| | | SA 518391384 B1 | 07-09-2021 |
| | | US 2018282217 A1 | 04-10-2018 |
| | | US 2022098107 A1 | 31-03-2022 |
| | | WO 2017067953 A1 | 27-04-2017 |
| WO 2010026155 A1 | 11-03-2010 | AU 2009289267 A1 | 11-03-2010 |
| | | BR PI0918283 A2 | 15-12-2015 |
| | | CA 2735705 A1 | 11-03-2010 |
| | | CN 102216234 A | 12-10-2011 |
| | | CN 108947375 A | 07-12-2018 |
| | | DE 202009017741 U1 | 20-05-2010 |
| | | DK 2321235 T3 | 24-06-2019 |
| | | DK 2664595 T3 | 26-08-2019 |
| | | DK 2664596 T3 | 26-08-2019 |
| | | EP 2321235 A1 | 18-05-2011 |
| | | EP 2664595 A2 | 20-11-2013 |
| | | EP 2664596 A2 | 20-11-2013 |
| | | EP 3153482 A1 | 12-04-2017 |
| | | ES 2711314 T3 | 03-05-2019 |
| | | ES 2711343 T3 | 03-05-2019 |
| | | ES 2730882 T3 | 13-11-2019 |

EPO FORM P0459

For more details about this annex : see Official Journal of the European Patent Office, No. 12/82

# ANNEX TO THE EUROPEAN SEARCH REPORT ON EUROPEAN PATENT APPLICATION NO.

EP 23 21 7702

This annex lists the patent family members relating to the patent documents cited in the above-mentioned European search report. The members are as contained in the European Patent Office EDP file on
The European Patent Office is in no way liable for these particulars which are merely given for the purpose of information.

20-06-2024

| Patent document cited in search report | Publication date | Patent family member(s) | Publication date |
|---|---|---|---|
| | | HR P20191076 T1 | 29-11-2019 |
| | | HU E042656 T2 | 29-07-2019 |
| | | HU E042657 T2 | 29-07-2019 |
| | | HU E044019 T2 | 30-09-2019 |
| | | JP 6071199 B2 | 01-02-2017 |
| | | JP 6133355 B2 | 24-05-2017 |
| | | JP 6622335 B2 | 18-12-2019 |
| | | JP 2012501293 A | 19-01-2012 |
| | | JP 2015147939 A | 20-08-2015 |
| | | JP 2016000695 A | 07-01-2016 |
| | | JP 2018108930 A | 12-07-2018 |
| | | LT 2321235 T | 10-07-2019 |
| | | LT 2664595 T | 11-02-2019 |
| | | LT 2664596 T | 25-02-2019 |
| | | PL 2321235 T3 | 30-09-2019 |
| | | PL 2664595 T3 | 31-05-2019 |
| | | PL 2664596 T3 | 31-05-2019 |
| | | PT 2321235 T | 25-06-2019 |
| | | RU 2011112305 A | 10-10-2012 |
| | | SI 2321235 T1 | 29-11-2019 |
| | | TR 201901059 T4 | 21-02-2019 |
| | | TR 201901118 T4 | 21-02-2019 |
| | | TR 201908413 T4 | 22-07-2019 |
| | | TW 201016629 A | 01-05-2010 |
| | | US 2011269875 A1 | 03-11-2011 |
| | | WO 2010026155 A1 | 11-03-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017067953 A1
- WO 2023280572 A1
- WO 2006042709 A1
- WO 2010040612 A1


### Non-patent literature cited in the description


- **SCRIVENER et al.** *Capmas in Lea's Chemistry of Cement and Concrete*, 1998, 713-782
- **H. PÖLLMANN**. *Reviews in Mineralogy and Geochemistry*, 2012, vol. 74, 1-82
- **YANG et al.** *Energy Storage Materials*, 2021, vol. 36, 186-212
- **ENGBERT et al.** *JACS*, 2021, vol. 104, 1067-1075
- **H. DARWEESH**. *Ceramics International*, 2004, vol. 30, 145-150
- **KOEHLER et al.** *Cement and Concrete Research*, 2022, vol. 162, 106972
- **SAWKOW et al.** *Journal of Thermal Analysis and Calorimetry*, 2003, vol. 74, 451-458
- **GOERGENS et al.** *Cement and Concrete Research*, 2020, vol. 136, 106160
- **BALTAKYS et al.** *Ceramics International*, 2019, vol. 45, 2881-2886
- **K. SCRIVENER** ; **R. SNELLING** ; **B. LOTHENBACH**. A Practical Guide to Microstructural Analysis of Cementitious Materials. CRC Press, 2016
- Test Method 2B.5 Analysis of Calcium Aluminate Cement Hydrates by Thermal Gravimetric Analysis. University of Sydney, 2020
- **K. D. LECHNER** ; **K. GEHRKE** ; **E. H. NORDMEIER**. Makromolekulare Chemie: ein Lehrbuch für Chemiker, Physiker, Materialwissenschaftler und Verfahrenstechniker. Springer Spektrum, 2014
- **N. UKRAINCZYK** ; **T. MATUSINOVIC** ; **S. KURAJICA** ; **B. ZIMMERMAN** ; **J. SIPUSIC**. Dehydration of layered double hydroxide - C2AH8. *Thermochimica Acta*, 2007, vol. 464, 7-15
- **N. UKRAINCZYK** ; **T. MATUSINOVIC** ; **S. KURAJICA** ; **B. ZIMMERMANN** ; **J. SIPUSIC**. *Thermochimica Acta*, 2007, vol. 464, 7-15